# FASCICULE DE BREVET EUROPEEN

(11) **EP 4 089 559 B1**
(45) Date de publication et mention de la délivrance du brevet: **30.08.2023**
(21) Numéro de dépôt: 22168533.2
(22) Date de dépôt: 14.04.2022
(51) Int. Cl.: G06F 21/54, G06F 21/75

(54) **MICROPROCESSEUR ÉQUIPÉ D'UNE UNITÉ ARITHMÉTIQUE ET LOGIQUE ET D'UN MODULE MATÉRIEL DE SÉCURISATION**
MIKROPROZESSOR, DER MIT EINER ARITHMETISCHEN UND LOGISCHEN EINHEIT SOWIE MIT EINEM SICHERHEITSHARDWAREMODUL AUSGESTATTET IST
MICROPROCESSOR PROVIDED WITH AN ARITHMETIC LOGIC UNIT AND A SECURITY HARDWARE MODULE

(30) Priorité: 10.05.2021 FR 2104898
(43) Date de publication de la demande: 16.11.2022
(73) Titulaire: Commissariat à l'énergie atomique et aux énergies alternatives, 75015 Paris (FR)
(72) Inventeur: LEPLUS, Gaetan, 38054 GRENOBLE CEDEX 09 (FR); SAVRY, Olivier, 38054 GRENOBLE Cedex 9 (FR)
(74) Mandataire: INNOV-GROUP

(56) Documents cités:
- EP-A1- 3 457 620
- FR-A1- 3 071 082
- SAVRY OLIVIER ET AL: "Confidaent: Control FLow protection with Instruction and Data Authenticated Encryption", 2020 23RD EUROMICRO CONFERENCE ON DIGITAL SYSTEM DESIGN (DSD), IEEE, 26 août 2020 (2020-08-26), pages 246-253, XP033838506, DOI: 10.1109/DSD51259.2020.00048

## Description

L'invention concerne un microprocesseur équipé d'une unité arithmétique et logique et d'un module matériel de sécurisation.

Pour obtenir des informations sur un code binaire ou provoquer un fonctionnement inattendu du code binaire, de nombreuses attaques sont possibles. Par exemple, des attaques connues sous le terme d'« injection de fautes » ou « fault attack » en anglais peuvent être mises en oeuvre. Ces attaques consistent à perturber le fonctionnement du microprocesseur ou de la mémoire contenant le code binaire, par divers moyens physiques comme des modifications des tensions d'alimentation, des modifications du signal d'horloge, l'exposition du microprocesseur à des ondes électromagnétiques et autres.

À l'aide de telles attaques, un attaquant peut altérer l'intégrité des instructions machines ou des données pour, par exemple, retrouver une clé secrète d'un système cryptographique, contourner des mécanismes de sécurité tels que la vérification d'un code PIN lors d'une authentification ou simplement empêcher l'exécution d'une fonction essentielle pour la sécurité d'un système critique.

Ces attaques peuvent provoquer notamment trois types de fautes, dites fautes d'exécution, lors de l'exécution du code binaire :
1) une altération des instructions du code machine exécuté,
2) une altération des données stockées dans la mémoire principale ou dans des registres du microprocesseur, et
3) une altération du flot de contrôle du code machine.

Le flot de contrôle correspond au chemin d'exécution suivi lors de l'exécution du code machine. Le flot de contrôle est classiquement représenté sous la forme d'un graphe connu sous le terme de graphe de flot de contrôle ou « control flow graph » en anglais.

Pour détecter de telles fautes d'exécution, il a déjà été proposé d'associer un code correcteur d'erreur à chaque donnée traitée par le microprocesseur. Ensuite, le code correcteur d'erreur associé au résultat de l'instruction qui traite ces données est calculé à partir des codes correcteurs d'erreur des données traitées. Ainsi, si une faute se produit lors de l'exécution de cette instruction, le résultat obtenu ne correspond pas au code correcteur d'erreur calculé. Cela permet de détecter cette faute. Une telle solution est par exemple divulguée dans la demande FR3071082. L'algorithme pour construire le code correcteur d'erreur associé à une donnée est connu. Il est donc possible pour un attaquant d'injecter des fautes de manière à modifier le code correcteur d'erreur calculé pour le résultat de manière à ce qu'il corresponde au résultat fauté. Dans ce cas, la faute d'exécution n'est pas détectée.

Pour pallier à l'inconvénient ci-dessus, il a été proposé de remplacer le code correcteur d'erreur par un code d'intégrité. Ce code d'intégrité est construit à partir de la donnée et, en plus, à l'aide d'une clé secrète connue seulement du microprocesseur. Ainsi, il est difficile pour un attaquant de modifier un code d'intégrité pour qu'il corresponde à un résultat fauté puisqu'il ne connaît pas la clé secrète. Il faut cependant qu'il soit toujours possible de construire le code d'intégrité du résultat en utilisant les codes d'intégrité associés aux données traitées et sans utiliser le résultat de l'instruction exécutée par l'unité arithmétique et logique. Par exemple, une telle solution est décrite dans l'article suivant : L. De Meyer, V. Arribas, S. Nikova, V. Nikov et V. Rijmen : "M&M : Masks and Macs against physical attacks", IACR Transactions on Cryptographie Hardware and Embedded Systems, page 25-50, 2019. Cet article est par la suite désigné par le terme "DEMEYER2019". Le procédé décrit dans cet article pour calculer le code d'intégrité du résultat à partir des codes d'intégrités des données traitées est complexe. En effet, pour cela il fait intervenir des multiplications dans un champ de Galois. Des circuits matériels qui calculent rapidement des multiplications dans un champ de Galois sont complexes et lents. Le procédé de DEMEYER2019 est donc difficile à implémenter dans un microprocesseur y compris dans le cas des opérations booléennes.

De l'état de la technique est aussi connu de EP3457620A1 et de l'article suivant : Savry Olivier et AL : "Confidaent : Control Flow protection with Instruction and Data Authenticated Encryption", 2020 23 RD Euromicro Conférence On Digital System Design, 26/08/2020, pages 246-253.

L'objectif est de proposer un microprocesseur qui présente, pour au moins une opération arithmétique et logique exécutée, le même niveau de sécurité que celui décrit dans l'article de DEMEYER2019 mais qui soit plus simple à réaliser.

L'invention a donc pour objet un tel microprocesseur conforme à la revendication 1.

L'invention sera mieux comprise à la lecture de la description qui va suivre, donnée uniquement à titre d'exemple non limitatif et faite en se référant aux dessins sur lesquels :
- la figure 1 est une illustration schématique de l'architecture d'un appareil électronique apte à exécuter un code binaire;
- la figure 2 est une illustration schématique de la structure d'un registre de l'appareil de la figure 1,
- la figure 3 est une illustration schématique d'une fonction F_{α} exécutée par l'appareil de la figure 1;
- la figure 4 est un organigramme d'un procédé d'exécution du code binaire par l'appareil de la figure 1,
- la figure 5 est une illustration schématique d'un circuit de calcul d'un code Cᵣₑₛ₋ₜ dans le cas d'une opération arithmétique de décalage d'un bit vers la gauche,
- les figures 6 et 7 sont des illustrations schématiques plus détaillées de deux composants du circuit de la figure 5,
- les figures 8 à 10 sont des illustrations schématiques de différents états de fonctionnement du circuit de la figure 5,
- la figure 11 est une illustration schématique d'un circuit de calcul d'un code Cᵣₑₛ₋ₜ dans le cas d'une opération arithmétique de décalage de 2^{r} bits vers la gauche,
- la figure 12 est une illustration schématique d'un circuit de calcul d'un code Cᵣₑₛ₋ₜ dans le cas d'une opération arithmétique de décalage de a_{NbE-1}2^{NbE-1}+....+a_{q}2^{q}+...+a₀ bits vers la gauche,
- la figure 13 est une illustration schématique d'un circuit de calcul d'un code Cᵣₑₛ₋ₜ dans le cas d'une opération arithmétique de rotation d'un bit vers la gauche,
- la figure 14 est une illustration schématique d'un circuit de calcul d'un code Cᵣₑₛ₋ₜ dans le cas d'une opération arithmétique d'addition, et
- les figures 15 et 16 sont des illustrations schématiques plus détaillées de deux composants du circuit de la figure 14.

### CHAPITRE I : Conventions, notations et définitions :

Dans les figures, les mêmes références sont utilisées pour désigner les mêmes éléments. Dans la suite de cette description, les caractéristiques et fonctions bien connues de l'homme du métier ne sont pas décrites en détails.

Dans cette description, les définitions suivantes sont adoptées.

Un « programme » désigne un ensemble d'une ou de plusieurs fonctions prédéterminées que l'on souhaite faire exécuter par un microprocesseur.

Un « code source » est une représentation du programme dans un langage informatique, n'étant pas directement exécutable par un microprocesseur et étant destiné à être transformé par un compilateur en un code machine directement exécutable par le microprocesseur.

Un programme ou un code est dit être « directement exécutable » lorsqu'il est apte à être exécuté par un microprocesseur sans que ce microprocesseur n'ait besoin au préalable de le compiler au moyen d'un compilateur ou de l'interpréter au moyen d'un interpréteur.

Une « instruction » désigne une instruction machine exécutable par un microprocesseur. Une telle instruction est constituée :
- d'un opcode, ou code d'opération, codant la nature de l'opération à exécuter, et
- d'un ou plusieurs opérandes définissant la ou les valeurs des paramètres de cette opération.

Les registres dans lesquels sont enregistrées la ou les données à traiter par une instruction sont typiquement identifiés par un ou plusieurs opérandes de l'instruction. De même, le registre Rᵣₑₛ₋ₚ dans lequel le résultat Dᵣₑₛ₋ₚ de l'exécution d'une instruction doit être enregistré peut aussi être identifié par un opérande de cette instruction.

Par « instruction logique », on désigne une instruction du jeu d'instructions du microprocesseur 2 qui, lorsqu'elle est exécutée par l'unité arithmétique et logique, enregistre dans un registre Rᵣₑₛ₋ₚ du microprocesseur le résultat d'une opération booléenne. L'opcode de l'instruction logique identifie l'opération booléenne à exécuter par l'unité arithmétique et logique pour modifier ou combiner la ou les données D₁ à Dₙ. Par la suite, le symbole "&" est utilisé pour désigner de façon générique une opération booléenne. Ainsi, la notation D₁&D₂&...&Dₙ désigne de façon générique une opération booléenne exécutée par le microprocesseur 2 entre les données D₁ à Dₙ. Dans le cas où n = 1, l'opération booléenne est l'opération complément également connue sous le nom d'opération booléenne "NON". Dans le cas où n est supérieur ou égal à deux, l'opération booléenne est choisie dans le groupe constitué des opérations booléennes suivantes et de leur composition :
- l'opération logique « OU »,
- l'opération logique « OU EXCLUSIF»,
- l'opération logique « ET ».

Les notations suivantes sont utilisées pour désigner des opérations booléennes :
- l'opération logique « OU » est désignée par le symbole "+",
- l'opération logique « OU EXCLUSIF» est désignée par le symbole "XOR",
- l'opération logique « ET » est désignée par le symbole ".",
- l'opération booléenne "NON" est désignée par le symbole " ' " situé après la variable dont le complément est calculé.

Par « instruction arithmétique », on désigne une instruction du jeu d'instructions du microprocesseur 2 qui, lorsqu'elle est exécutée par l'unité 10, enregistre dans un registre Rᵣₑₛ₋ₚ du microprocesseur le résultat d'une opération arithmétique. Une opération arithmétique est différente d'une opération booléenne. Typiquement, une opération arithmétique appartient au groupe composé des opérations de décalage de bits, des opérations de rotation de bits, des opérations d'addition, des opérations de multiplication et des opérations de division.

Par "Instruction arithmétique et logique", on désigne aussi bien une instruction logique qu'une instruction arithmétique. Par la suite, sauf indication contraire, le terme "instruction" désigne une instruction arithmétique et logique.

Un « code machine » est un ensemble d'instructions machines. Il s'agit typiquement d'un fichier contenant une succession de bits portant la valeur « 0 » ou « 1 », ces bits codant les instructions à exécuter par le microprocesseur. Le code machine est directement exécutable par le microprocesseur, c'est-à-dire sans nécessiter une compilation ou une interprétation préalable.

Un « code binaire » est un fichier contenant une succession de bits portant la valeur « 0 » ou « 1 ». Ces bits codent des données et des instructions à exécuter par le microprocesseur. Ainsi, le code binaire comprend au moins un code machine et en plus, généralement, des données numériques traitées par ce code machine.

On parle d'exécution d'une fonction pour désigner l'exécution des instructions réalisant cette fonction.

Un bloc de bits d'une donnée ou d'une variable est un groupe de bits consécutifs de cette donnée ou de cette variable. La taille d'un bloc de bits est égale au nombre de bits contenus dans ce bloc.

### CHAPITRE II : Architecture de l'appareil :

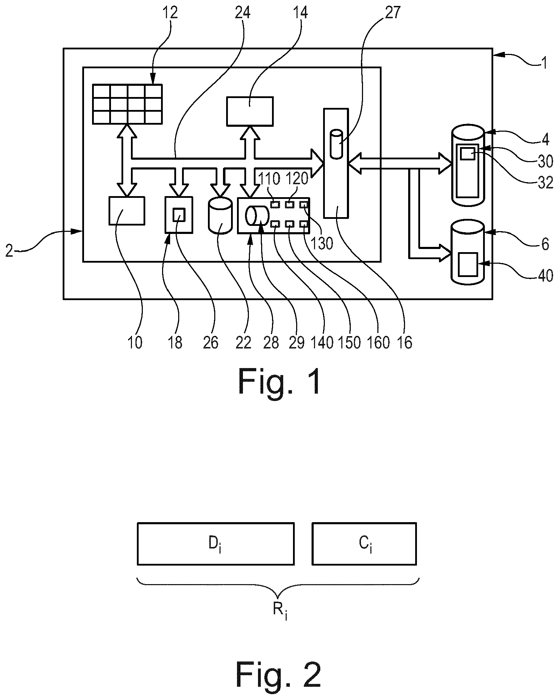

La figure 1 représente un appareil électronique 1 comportant un microprocesseur 2, une mémoire principale 4 et un support 6 de stockage de masse. Par exemple, l'appareil 1 est un ordinateur, un smartphone, une tablette électronique, une carte à puce ou similaire.

Le microprocesseur 2 comporte ici :
- une unité arithmétique et logique 10 ;
- un ensemble 12 de registres ;
- un module de commande 14 ;
- une interface 16 d'entrée/sortie de données,
- un chargeur 18 d'instructions comportant un compteur ordinal 26,
- une file 22 d'instructions à exécuter, et
- un module matériel 28 de sécurisation.

La mémoire 4 est configurée pour stocker des instructions d'un code binaire 30 d'un programme devant être exécuté par le microprocesseur 2. La mémoire 4 est une mémoire à accès aléatoire. Typiquement, la mémoire 4 est une mémoire volatile. La mémoire 4 peut être une mémoire externe au microprocesseur 2 comme représenté sur la figure 1. Dans ce cas, la mémoire 4 est réalisée sur un substrat mécaniquement séparé du substrat sur lequel sont réalisés les différents éléments du microprocesseur 2 comme l'unité 10.

A titre d'illustration, le code binaire 30 comporte notamment un code machine 32 d'une fonction sécurisée. Chaque fonction sécurisée correspond à un ensemble de plusieurs lignes de code, par exemple plusieurs centaines ou milliers de lignes de code, enregistrées à des adresses successives dans la mémoire 4. Ici, chaque ligne de code correspond à un mot-machine. Ainsi, une ligne de code est chargée dans un registre du microprocesseur 2 en une seule opération de lecture. De même, une ligne de code est écrite dans la mémoire 4 par le microprocesseur 2 en une seule opération d'écriture. Chaque ligne de code code soit une seule instruction soit une seule donnée.

A titre d'illustration, le microprocesseur 2 est un microprocesseur à jeu d'instructions réduit plus connu sous l'acronyme RISC (« Reduced Instructions Set Computer »).

Le chargeur 18 charge dans la file 22 la prochaine instruction à exécuter par l'unité 10 à partir de la mémoire 4. Plus précisément, le chargeur 18 charge l'instruction sur laquelle pointe le compteur ordinal 26. A cet effet, la file 22 comprend une succession de plusieurs registres.

L'unité 10 est notamment configurée pour exécuter les unes après les autres les instructions chargées dans la file 22. Les instructions chargées dans la file 22 sont généralement systématiquement exécutées dans l'ordre où ces instructions ont été enregistrées dans cette file 22. L'unité 10 est aussi capable d'enregistrer le résultat de ces instructions exécutées dans un ou plusieurs des registres de l'ensemble 12.

Dans cette description, on utilisera comme synonymes « exécution par le microprocesseur 2 » et « exécution par l'unité 10 ».

Le module 14 est configuré pour déplacer des données entre l'ensemble 12 de registres et l'interface 16. L'interface 16 est notamment apte à acquérir des données et des instructions, par exemple, depuis la mémoire 4 et/ou le support 6 extérieurs au microprocesseur 2. Ici, pour accélérer les transferts de données et d'instructions entre le microprocesseur 2 et la mémoire 4, l'interface 16 comporte une ou plusieurs mémoires caches. Pour simplifier la figure 1, seule une mémoire cache 27 est représentée. Cette mémoire cache 27 est utilisée pour stocker temporairement les données traitées par le microprocesseur 2 sur la même puce que l'unité 10.

Le module 28 est capable d'exécuter automatiquement les différentes opérations décrites en détails dans les chapitres suivants pour sécuriser l'exécution des instructions arithmétique et logique par l'unité 10. Le module 28 fonctionne indépendamment et sans utiliser l'unité 10. Ainsi, il est capable de traiter les lignes de code avant et/ou après que celles-ci soient traitées par l'unité 10. A cet effet, il comporte notamment une mémoire non-volatile sécurisée 29 et différents circuits matériels de calcul. Aucun accès à cette mémoire 29 sans passer par l'intermédiaire du module 28 n'est prévu. Dans ce mode de réalisation, le module 28 est configuré pour exécuter des opérations telles que les opérations suivantes :
- vérifier un code d'intégrité,
- construire un code d'intégrité à partir d'une donnée,
- construire le code d'intégrité d'un résultat à partir des codes d'intégrités des données traitées.

Chaque circuit de calcul construit un code Cᵣₑₛ₋ₜ d'intégrité d'un résultat Dᵣₑₛ₋ₚ à partir des codes d'intégrités C₁ à Cₙ des données D₁ à Dₙ traitées par l'unité 10 et sans utiliser directement le résultat Dᵣₑₛ₋ₚ. Ici, il existe un circuit 110 de calcul pour pour les instructions logiques. Il existe également un circuit de calcul pour chaque instruction arithmétique dont l'exécution doit être sécurisée. Ici, le module 28 comporte cinq circuits 120, 130, 140, 149 et 160 de calcul associés chacun à une instruction arithmétique respective. Ces circuits de calcul sont décrits plus en détail dans le chapitre IV suivant.

La mémoire 29 est utilisée pour stocker les informations secrètes nécessaires au fonctionnement du module 28. Ici, elle comporte donc notamment une clé secrète α pré-enregistrée.

Dans cet exemple de réalisation, l'ensemble 12 comporte des registres généraux utilisables pour stocker tout type de données. La taille de chacun de ces registres est suffisante pour y stocker une donnée ou un résultat et le code d'intégrité qui lui est associé.

Un bus d'échange de données 24 qui relie les différents composants du microprocesseur 2 entre eux est représenté sur la figure 1 pour indiquer que les différents composants du microprocesseur peuvent échanger des données entre eux.

Le support 6 est typiquement une mémoire non volatile. Par exemple, il s'agit d'une mémoire du type EEPROM ou Flash. Il contient ici une copie 40 de sauvegarde du code binaire 30. Typiquement, c'est cette copie 40 qui est automatiquement recopiée dans la mémoire 4 pour restaurer le code 30, par exemple, après une coupure de courant ou similaire ou juste avant que débute l'exécution du code 30.

### CHAPITRE III - SÉCURISATION DES INSTRUCTIONS ARITHMETIQUES ET LOGIQUES :

En injectant des fautes lors du fonctionnement de l'unité 10, il est possible de perturber son fonctionnement de sorte que le résultat de l'exécution de l'instruction arithmétique et logique ne correspond pas à celui attendu. On dit alors qu'on a provoqué un dysfonctionnement de l'unité 10. Ce chapitre décrit une solution pour détecter un tel dysfonctionnement de l'unité 10.

Les registres R₁ à Rₙ désignes les registres de l'ensemble 12 comportant, respectivement, les données D₁ à Dₙ à traiter lors de l'exécution de l'instruction. Le registre Rᵣₑₛ₋ₚ désigne le registre de l'ensemble 12 dans lequel le résultat, de l'exécution de l'instruction arithmétique et logique, est enregistré.

La taille, en nombre de bits, de chaque donnée D₁, D₂ et Dᵣₑₛ₋ₚ est égale à 2^{d}, où d est un nombre entier typiquement supérieur à quatre ou cinq.

Les structures des registres R₁, R₂ et Rᵣₑₛ₋ₚ sont identiques et représentées dans le cas particulier du registre Rᵢ sur la figure 2. Le registre Rᵢ comporte :
- une plage de bits contenant la donnée Dᵢ,
- une plage contenant un code Cᵢ d'intégrité permettant de vérifier l'intégrité et l'authenticité de la donnée Dᵢ.

Le code Cᵢ est généré par le module 28 à l'aide d'une relation préprogrammée définie de façon générique par la relation suivante : Cᵢ = Q_{α}(Dᵢ), où :
- l'indice i identifie un registre parmi les registres R₁, R₂ et Rᵣₑₛ₋ₚ, et
- la fonction Q_{α} est une fonction préprogrammée dans le module 28 et paramétrée par la clé secrète α.

La fonction Q_{α} est définie par la relation suivante : Q_{α}(Dᵢ) = P o F_{α}(Dᵢ), où le symbole "o" désigne l'opération de composition de fonctions. La fonction P est une fonction prédéterminée. Dans les premiers modes de réalisation décrits ci-dessous, la fonction P est la fonction identité. Ainsi, dans ces premiers modes de réalisation, la fonction Q_{α} est égale à la fonction F_{α}. Des exemples où la fonction P est différentes de la fonction identité sont donnés dans le chapitre traitant des variantes.

La fonction F_{α} est un homomorphisme d'un ensemble A muni de l'opération booléenne "&" vers un ensemble B muni de la même opération booléenne "&" telle que F_{α}(D₁&D₂) = F_{α}(D₁) & F_{α}(D₂) et cela pour toutes les opérations booléennes "&". Ici, les ensembles A et B sont chacun l'ensemble des nombres codables sur 2^{d} bits, c'est-à-dire l'ensemble des données D₁ et D₂ possibles. Ainsi, en utilisant les notations précédemment introduites, la fonction F_{α} est telle que pour toute opération booléenne &, le circuit 110 calcule simplement le code d'intégrité Cᵣₑₛ₋ₜ associé au résultat Dᵣₑₛ₋ₚ de l'opération booléenne D₁ & D₂ à l'aide de la relation suivante Cᵣₑₛ₋ₜ = C₁ & C₂. Lorsque l'opération booléenne exécutée est l'opération complément de la donnée D₁, le circuit 110 calcule le code Cᵣₑₛₜ₋ₜ associé au résultat Dᵣₑₛ₋ₚ à l'aide de la relation suivante Cᵣₑₛ₋ₜ = C₁', où le symbole " ' " désigne l'opération complément qui retourne un "1" quand D₁ = 0 et qui retourne "0" quand D₁ = 1.

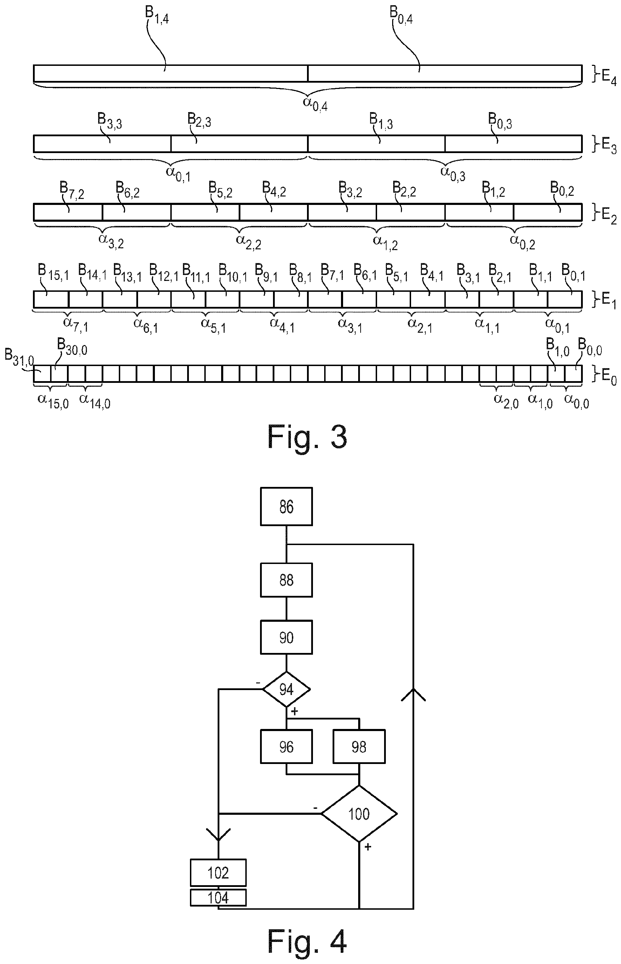

La figure 3 représente la fonction F_{α} utilisée dans ce mode de réalisation. La fonction F_{α} est définie par la relation suivante : F_{α}(Dᵢ) = E₀ o...o E_{q} o ... o E_{NbE-1}(Dᵢ), où :
- chaque fonction E_{q} est un étage de transpositions exécutables en parallèle,
- NbE est le nombre d'étages de transpositions, et
- l'indice q est un numéro d'ordre compris entre zéro à NbE-1.

Le nombre NbE est supérieur à un et inférieur ou égale à d. De préférence, le nombre NbE est égal à d. Sur la figure 3, d =5 et NbE = 5.

Chaque étage E_{q} de transpositions est défini par la relation suivante : E_{q}(x) = T_{αm,q} o...o T_{αj,q} o ... o T_{α1,q} o T_{α0,q}(x), où :
- x est une variable dont la taille, en nombre de bits, est égale à la taille de la donnée Dᵢ,
- T_{αj,q} est une transposition conditionnelle paramétrée par le paramètre α_{j,q} qui permute deux blocs de bits B_{2j+1,q} et B_{2j,q} de la variable x lorsque le paramètre α_{j,q} est égal à "1" et qui ne permute pas ces deux blocs de bits lorsque le paramètre α_{j,q} est égal "0",
- "m+1" est le nombre total de transpositions T_{αj,q} de l'étage E_{q},
- "j" est un numéro d'ordre identifiant la transposition T_{αj,q} parmi les autres transpositions de l'étage E_{q}. L'indice "j" identifie donc aussi la position des blocs B_{2j+1,q} et B_{2j,q} dans la variable x. Dans cette demande, les blocs sont classés par ordre croissant de leur indice qui dépend de la valeur de l'indice j.

Chaque transposition T_{αj,q} se distingue de toutes les autres transpositions de la fonction F_{α} par le fait que c'est la seule qui permute les deux blocs B_{2j+1,q} et B_{2j,q} lorsque le paramètre α_{j,q} est égal à "1". De plus, les blocs B_{2j+1,q} et B_{2j,q} de toutes les transpositions T_{αj,q} du même étage E_{q} sont différents les uns des autres et ne se chevauchent pas. Ainsi, toutes les transpositions T_{αj,q} de l'étage E_{q} peuvent être exécutées en parallèle. Ici, les étages E_{q} sont exécutés les uns après les autres dans l'ordre décroissant des indices q.

De plus, cette fonction F_{α} présente les caractéristiques suivantes :
- les blocs B_{2j+1,q} et B_{2j,q} permutés par la transpositions T_{αj,q} sont des blocs contigus,
- la taille des blocs B_{2j+1,q} et B_{2j,q} est égal à 2^{q},
- le nombre m de transpositions T_{αj,q} par étage E_{q} est égal à 2^{d-q-1}.

Les notations B_{2j+1,q} et B_{2j,q} indiquent qu'il s'agit, respectivement, du (2j+1)-ième et du 2j-ième blocs de 2^{q} bits de la variable x. Sur la figure 3, le bloc B_{0,q} est le bloc de bits de poids le plus faible, le bloc B_{1,q} le bloc suivant et ainsi de suite. Chaque accolade horizontale sur la figure 3 englobe les deux blocs B_{2j+1,q} et B_{2j,q} d'une transposition T_{αj,q} dont le paramètre est α_{j,q}.

Dans le cas de la figure 3, pour tous les étages E_{q} pour lesquels q est inférieur à NbE-1 et pour toutes les transpositions T_{αj,q} de cet étage, les blocs B_{2j+1,q} et B_{2j,q} sont tous les deux situés à l'intérieur d'un même bloc B_{l,q+1} de l'étage supérieur E_{q+1}, où l'indice "I" désigne le bloc de l'étage supérieur qui contient les blocs B_{2j+1,q} et B_{2j,q.} Par exemple, comme visible sur la figure 3, les blocs B_{1,q} et B_{0,q} de l'étage E_{q} sont systématiquement situés à l'intérieur du bloc B_{0,q+1} de l'étage supérieur E_{q+1}. De plus, ici, chaque bloc d'un étage supérieur E_{q+1} contient au plus deux blocs de l'étage inférieur E_{q}.

Le fonctionnement du microprocesseur 2 pour sécuriser l'exécution d'instructions arithmétique et logique va maintenant être décrit plus en détail en référence à la figure 4.

Le procédé débute par la fourniture, lors d'une étape 86, du code binaire 30. Lors de cette étape, dans cet exemple, le code binaire 30 est chargé dans la mémoire 4 à partir du support 6. Ensuite, l'exécution du code binaire 30 par le microprocesseur 2 débute.

Lors d'une étape 88, a chaque fois qu'une donnée Dᵢ est enregistrée dans la mémoire cache 27, le module 28 calcule le code Cᵢ à l'aide de la relation Cᵢ = F_{α}(Dᵢ). Ensuite, la donnée Dᵢ et le code Cᵢ qui lui est associé sont tous les deux enregistrés das la mémoire 27.

À chaque fois qu'une instruction de chargement d'une donnée dans l'un des registres Rᵢ est exécutée par l'unité 10, lors d'une étape 90, la donnée Dᵢ et le code Cᵢ sont écrits dans ce registre Rᵢ.

Avant l'exécution d'une instruction arithmétique et logique entre deux données D₁ et D₂, l'étape 90 est exécutée une fois pour la donnée D₁ et une fois pour la donnée D₂.

Ensuite, à chaque fois qu'une instruction arithmétique et logique est sur le point d'être exécutée par l'unité 10, juste avant son exécution, lors d'une étape 94, le module 28 vérifie s'il existe une erreur dans la donnée Dᵢ contenue dans le registre Rᵢ identifié par un opérande de l'instruction à exécuter.

Lors de cette étape, pour chaque registre Rᵢ concerné, le module 28 vérifie, à l'aide du code Cᵢ contenu dans le registre Rᵢ, si la donnée Dᵢ actuellement enregistrée dans ce registre présente une erreur ou pas. Par exemple, pour cela, le module 28 calcule un code Cᵢ* à l'aide de la relation Cᵢ* = F_{α}(Dᵢ) et sans utiliser le code Cᵢ enregistré dans le registre Rᵢ. Si le code Cᵢ* ainsi calculé est identique au code Cᵢ enregistré dans le registre Rᵢ, alors l'intégrité et l'authenticité de la donnée D; sont confirmées. Dans ce cas, le module 28 ne détecte aucune erreur et procède à une étape 96. Dans le cas contraire, le module 28 procède à une étape 102.

Lors de l'étape 102, le module 28 déclenche le signalement d'une faute d'exécution.

Si le module 28 ne détecte aucune erreur, lors de l'étape 96, le microprocesseur 2 décode l'instruction arithmétique et logique puis l'unité 10 l'exécute et enregistre son résultat Dᵣₑₛ₋ₚ dans le registre Rᵣₑₛ₋ₚ.

Dans le cas où l'instruction exécutée est une instruction arithmétique et logique dont l'exécution est sécurisée, en parallèle de l'étape 96 ou après l'exécution de l'étape 96, lors d'une étape 98, le module 28 calcule le code Cᵣₑₛ₋ₜ en utilisant uniquement les codes Cᵢ associés aux données Dᵢ traitées par l'unité 10 lors de l'étape 96. Ainsi, dans le cas où ce sont les données D₁ et D₂ qui sont traitées, le code Cᵣₑₛ₋ₜ est calculé en combinant les codes C₁ et C₂ enregistrés, respectivement, dans les registres R₁ et R₂ préalablement à l'exécution de l'instruction logique.

Plus précisément, dans le cas où l'instruction exécutée est une instruction logique, le circuit 110 calcule le code Cᵣₑₛ₋ₜ à l'aide de la relation suivante : Cᵣₑₛ₋ₜ = C₁ & C₂, où le symbole « & » désigne l'opération booléenne exécutée par l'unité 10 lors de l'étape 96.

Dans le cas où l'instruction exécutée est une instruction arithmétique pour laquelle le module 28 comporte un circuit spécifique de calcul du code Cᵣₑₛ₋ₜ, alors ce circuit spécifique est sélectionné et le code Cᵣₑₛ₋ₜ est calculé par ce circuit spécifique. Des exemples de tels circuits spécifiques de calcul sont décrits en détail dans le chapitre suivant.

Ensuite, lors d'une étape 100, le module 28 vérifie si le code Cᵣₑₛ₋ₜ calculé correspond à un code Cᵣₑₛ₋ₚ calculé à partir du résultat Dᵣₑₛ₋ₚ enregistré dans le registre Rᵣₑₛ₋ₚ. Dans le cas des circuits 110, 120, 130, 149 et 160, le code Cᵣₑₛ₋ₚ est calculé en mettant en oeuvre la relation Cᵣₑₛ₋ₚ = F_{α}(Dᵣₑₛ₋ₚ). Dans le cas où le code Cᵣₑₛ₋ₜ est calculé par le circuit 140, le code Cᵣₑₛ₋ₚ est égal au résultat Dᵣₑₛ₋ₚ.

Ensuite, le module 28 compare les codes Cᵣₑₛ₋ₚ et Cᵣₑₛ₋ₜ calculés. Si ces codes sont différents, le module 28 déclenche l'exécution de l'étape 102. Dans le cas contraire, cela veut dire que le code Cᵣₑₛ₋ₜ correspond au code Cᵣₑₛ₋ₚ et donc qu'il n'y a pas eu de faute lors de l'exécution de l'instruction par l'unité 10. Dans ce dernier cas, aucun signalement d'une faute d'exécution n'est déclenché et le procédé se poursuit par l'exécution de l'instruction suivante de la file 22.

L'exécution des étapes 98 et 100 permet de détecter un dysfonctionnement de l'unité 10 car les codes calculés Cᵣₑₛ₋ₚ et Cᵣₑₛ₋ₜ sont identiques seulement si l'unité 10 a correctement exécuté l'instruction arithmétique et logique. Dans le cas d'une instruction logique, ceci s'explique simplement par la relation suivante : Cᵣₑₛ₋ₚ = F_{α}(Dᵣₑₛ₋ₚ) = F_{α}(D₁&D₂) = F_{α}(D₁) & F_{α}(D₂) = C₁ & C₂ = Cᵣₑₛ₋ₜ. Dans le cas des instructions arithmétiques, cela s'explique par la structure et les opérations réalisées par le circuit de calcul mis en oeuvre.

Si l'instruction exécutée lors de l'étape 96 est l'opération de complément de la donnée D₁, lors de l'étape 98, le code Cᵣₑₛ₋ₜ est calculé à l'aide de la relation suivante : Cᵣₑₛ₋ₜ = C₁'. Le reste du procédé est ensuite identique à ce qui a été décrit précédemment. Dans le cas de l'opération de complément, les codes Cᵣₑₛ₋ₚ et Cᵣₑₛ₋ₜ sont identiques uniquement si l'unité 10 a correctement fonctionné. Ceci se démontre à l'aide de la relation suivante : Cᵣₑₛ₋ₚ = F_{α}(Dᵣₑₛ₋ₚ) = F_{α} (D₁') = F_{α}(D₁)'= C₁' =Cᵣₑₛ₋ₜ.

En réponse à un signalement d'une faute d'exécution, lors d'une étape 104, le microprocesseur 2 met en oeuvre une ou plusieurs contre-mesures. De très nombreuses contre-mesures sont possibles. Les contre-mesures mises en oeuvre peuvent avoir des degrés de sévérité très différents. Par exemple, les contre-mesures mises en oeuvre peuvent aller d'un simple affichage ou une simple mémorisation d'un message d'erreur sans interrompre l'exécution normale du code machine 32 jusqu'à une mise hors service définitive du microprocesseur 2. Le microprocesseur 2 est considéré comme étant hors service lorsqu'il est définitivement placé dans un état où il est incapable d'exécuter un quelconque code machine. Entre ces degrés de sévérité extrêmes, il existe de nombreuses autres contre-mesures possibles telles que :
- l'indication par l'intermédiaire d'une interface homme-machine de la détection des fautes,
- l'interruption immédiate de l'exécution du code machine 32 et/ou sa réinitialisation, et
- la suppression du code machine 32 de la mémoire 4 et/ou la suppression de la copie 40 de sauvegarde et/ou la suppression des données secrètes.

### CHAPITRE IV - EXEMPLES DE CIRCUITS DE CALCUL DU CODE Cᵣₑₛ₋ₜ :

La fonction F_{α} précédemment décrite permet de conserver la localité des bits. Par cela, on désigne la propriété selon laquelle les bits d'une donnée Dᵢ qui sont situés à l'intérieur du bloc B_{2j+1,q} ou B_{2j,q} restent toujours à l'intérieur de ce bloc. Autrement dit, les transpositions T_{αj,q-1} à T_{αj,0} qui s'appliquent aux bits de ce bloc B_{2j+1,q} ou B_{2j,q} ne peuvent pas permuter un bit de ce bloc avec un bit situé en dehors de ce bloc. Par contre, les bits du bloc B_{2j+1,q} ou B_{2j,q} peuvent être déplacés à l'intérieur de ce bloc par l'application de ces transpositions T_{αj,q-1} à T_{αj,0}. Cela provient du fait que, pour tous les étages E_{q} pour lesquels q est inférieur à NbE-2 et pour toutes les transpositions T_{αj,q} de cet étage, les blocs B_{2j+1,q} et B_{2j,q} sont tous les deux situés à l'intérieur d'un même bloc B_{l,q+1} de l'étage supérieur E_{q+1}. C'est cette propriété particulière de la fonction F_{α} qui permet de réaliser des circuits de calcul du code Cᵣₑₛ₋ₜ, simples et rapides, pour chaque instruction arithmétique. Par la suite, ceci est illustré dans le cas particuliers d'instructions de décalage de bits, d'une instruction de rotation et d'une instruction d'addition. Toutefois, à partir de ces exemples, l'homme du métier est capable de réaliser d'autres circuits de calcul du code Cᵣₑₛ₋ₜ pour d'autres instructions arithmétiques.

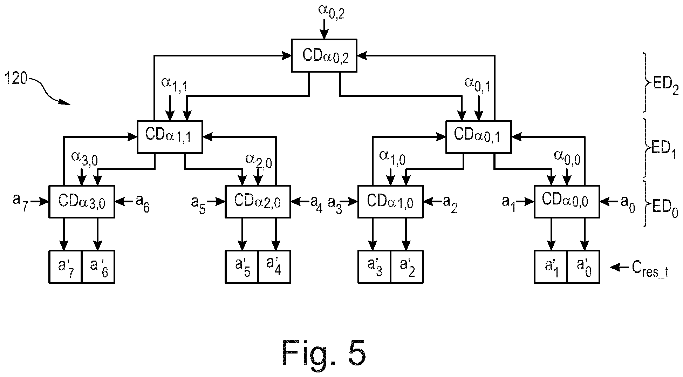

La figure 5 représente le circuit 120 de calcul du code Cᵣₑₛ₋ₜ dans le cas où l'instruction arithmétique exécutée par l'unité 10 est une instruction de décalage logique de 1 bit à gauche des bits de la donnée D₁. Le code Cᵣₑₛ₋ₜ est calculé uniquement à partir du code C₁. Pour simplifier la figure 5, le circuit 120 est illustré dans le cas particulier où la taille des codes C₁ et Cᵣₑₛ₋ₜ est égale à 8 bits. Dans ce cas, le nombre NbE d'étages est égal à trois. Toutefois, ce qui est décrit pour cette taille particulière se généralise sans difficulté à toutes tailles possibles.

Sur la figure 5, les huit bits consécutifs du code C₁ sont désignés par les symboles a₀ à a₇, où a₀ est le bit de poids le plus faible et a₇ le bit de poids le plus fort.

Les bits du code Cᵣₑₛ₋ₜ sont désignés par les symboles a'₀ à a'₇, ces bits a'₀ à a'₇ étant classés dans le même ordre que les bits du code C₁.

Pour chaque étage E_{q} de la fonction F_{α}, le circuit 120 comporte un étage ED_{q} correspondant. Chaque étage ED_{q} comporte un composant CD_{αj,q} pour chaque transposition T_{αj,q} de l'étage E_{q}. Plus précisément, chaque composant CD_{αj,q} est associé à une transposition respective T_{αj,q} correspondante. Les composants CD_{αj,q} sont classés par ordre croissant de leur indice qui varie en fonction de l'indice j.

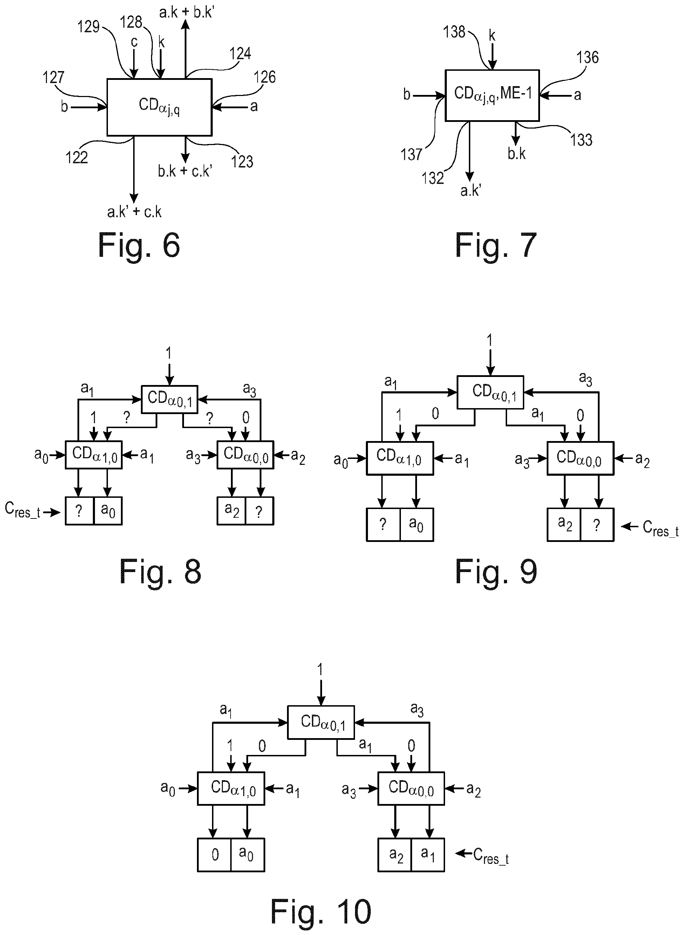

Pour q inférieur à NbE-1, les composants CD_{αj,q} sont tous structurellement identiques les uns aux autres. Un de ces composants CD_{αj,q} est représenté plus en détail sur la figure 6. Il comporte trois sorties 122 à 124 et quatre entrées 126 à 129.

La sortie 122 délivre le résultat a.k' + c.k, où a, k et c sont les valeurs reçues respectivement sur les entrées 126, 128 et 129.

La sortie 123 délivre le résultat b.k + c.k', où b est la valeur reçue sur l'entrée 127.

La sortie 124 délivre le résultat a.k + b.k'.

Les entrées 126 et 127 de chaque composant CD_{αj,0} de l'étage ED₀ sont raccordées, respectivement, au 2j-ième et au (2j+1)-ième bits du code C₁. Pour q supérieur à zéro et q inférieur à NbE-1, les entrées 126 et 127 de chaque composant CD_{αj,q} sont raccordées, respectivement, aux sorties 124, respectivement du composant CD_{α2j,q-1} et CD_{α(2j+1),q-1} de l'étage ED_{q-1.}

L'entrée 128 de chaque composant CD_{αj,q} reçoit le paramètre α_{j,q} de la transposition T_{αj,q} à laquelle il est associé.

Pour q supérieur à zéro, les sorties 122 et 123 de chaque composant CD_{αj,q} sont raccordées à l'entrée 129, respectivement, des composants CD_{α(2j+i),q-1}et CD_{α2j,q-1}. Pour q = 0, les sorties 122 et 123 de chaque composant CD_{αj,0} délivrent, respectivement, le (2j+1)-ième et le 2j-ième bits du code Cᵣₑₛ₋ₜ.

L'étage ED_{NbE-1} comporte un seul composant CD_{α0,NbE-1}. Le composant CD_{α0,NbE-1} est représenté plus en détail sur la figure 7. Il comporte deux sorties 132 et 133 et trois entrées 136 à 138. Les sorties 132 et 133 délivrent, respectivement, les résultats "a" et "0" lorsque l'entrée 138 est égale à "0", où "a" est la valeur reçue sur l'entrée 136 et "0" est la valeur nulle. Les sorties 132 et 133 délivrent, respectivement, les résultats "0" et "b" lorsque l'entrée 138 est égale à "1", où "b" est la valeur reçue sur l'entrée 137.

Les entrées 136 et 137 du composant CD_{α0,NbE-1} sont raccordées aux sorties 124, respectivement, des composants CD_{α0,NbE-2} et CD_{α1,NbE-2}. L'entrée 138 reçoit le paramètre α_{0,NbE-1}. Les sorties 132 et 133 sont raccordées aux entrées 129, respectivement, des composants CD_{α1,NbE-2} et CD_{α0,NbE-2}.

Lorsque l'instruction exécutée lors de l'étape 96 est une instruction de décalage d'un bit à gauche, le circuit 120 est sélectionné pour réaliser l'étape 98. A cet effet, les bits du code C₁ sont délivrés sur les entrées 126 et 127 des composants CD_{αj,0}. En réponse, les composants CD_{αj,0} délivrent sur les entrées 126 et 127 de l'étage supérieur ED₁, les résultats présents sur leur sortie 124. Ce processus est réitéré d'étage en étage, jusqu'à atteindre le composant CD_{α0,NbE-1}. Le composant CD_{α0,NbE-1} délivre alors sur les entrées 129 des composants CD_{αj,NbE-2}, les résultats, respectivement, a.k' et b.k présents sur ses sorties 132 et 133. En réponse, le composant CD_{αj,NbE-2} délivre sur les entrées 129 des composants CD_{αj,q} de l'étage E_{q} inférieur, les résultats a.k' + c.k et b.k + c.k'. Le processus est alors réitéré d'étage en étage, jusqu'à atteindre les composants CD_{αj,0} de l'étage ED₀. Les composants CD_{αj,0} délivrent alors sur leurs sorties 122 et 123 les différents bits du code Cᵣₑₛ₋ₜ calculé. Ensuite, le procédé se poursuit par l'étage 100.

Le fonctionnement du circuit 120 est illustré sur les figures 8 à 10 dans un cas simplifié où la taille des codes C₁ et Cᵣₑₛ₋ₜ est égale à quatre bits. Le nombre NbE d'étages E_{q} est donc égal à deux. De plus, dans cet exemple particulier, les paramètres α_{0,0}, α_{1,0} et α_{0,1} sont égaux, respectivement, à 0, 1 et 1. Les bits a₀, a₁, a₂ et a₃ de la donnée D₁ sont classés dans l'ordre croissant en partant du bit de poids le plus faible vers le bit de poids le plus fort. Dans ces conditions, avec les valeurs données ci-dessus pour les paramètres α_{0,0}, α_{1,0} et α_{0,1}, le code C₁ est égal à a₀, a₁, a₃, a₂. Le résultat Dᵣₑₛ₋ₚ est quant à lui égal à a₂, a₁, a₀, 0. Sur les figures 8 et 9, le symbole "?" indique qu'à ce stade de fonctionnement, cette valeur est inconnue.

La figure 8 montre que lorsque les valeurs α_{0,0} et α_{1,0} sont égales, respectivement, à 0 et 1, les composants CD_{α0,0} et CD_{α1,0} délivrent sur leur sortie 124 les valeurs, respectivement, a₃ et a₁. Ensuite, en réponse (figure 9), le composant CD_{α0,1} délivre sur ses sorties 132 et 133 les valeurs, respectivement 0 et a₁. Enfin (figure 10), les composants CD_{α0,0} et CD_{α1,0} délivrent sur leurs sorties 122 et 123 les bits du code Cᵣₑₛ₋ₜ calculé. Dans cet exemple, le code Cᵣₑₛ₋ₜ calculé est 0, a₀, a₂, a₁. Il peut facilement être vérifié que ce code Cᵣₑₛ₋ₜ calculé est égale à F_{α}(Dᵣₑₛ₋ₚ) en absence de faute d'exécution.

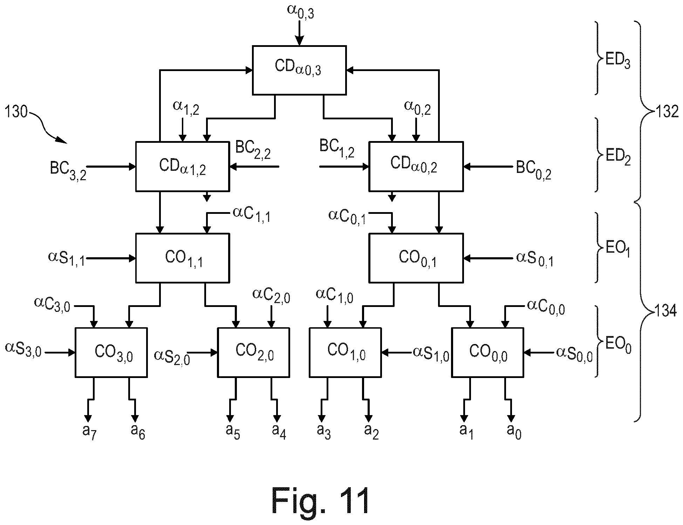

La figure 11 représente le circuit 130 de calcul du code Cᵣₑₛ₋ₜ dans le cas où l'instruction arithmétique exécutée par l'unité 10 est un décalage logique de 2^{r} bits vers la gauche, où r est un nombre entier supérieur à un et inférieur à NbE-1. Sur la figure 11, le circuit 130 est représenté dans le cas particulier où NbE = d =4 et r = 2.

Par la suite, les notations suivantes sont utilisées pour décrire le circuit 130. Les symboles BC_{y,r}, BCI_{x,r}, BCR_{x,r} et BD_{z,r} désignent les blocs de 2^{r} bits, respectivement, à la position y dans le code C₁, à la position x dans un code intermédiaire CI, à la position x dans le code Cᵣₑₛ₋ₚ et à la position z dans la donnée D₁. Les indices y, x et z sont ici des numéros d'ordre qui commencent à 0 et qui augmentent de 1 à chaque fois que l'on passe d'un bloc de 2' bits au bloc de 2^{r} bits suivant, en se déplaçant vers les bits de poids les plus forts.

Le circuit 130 comporte un permutateur supérieur 131 et un ordonnanceur 134. Le permutateur 131 permet de calculer la position des blocs de 2' bits à l'intérieur du code Cᵣₑₛ₋ₜ à partir du code C₁. Pour cela, ici, le permutateur 131 comporte des étages EDᵣ à ED_{NbE-1} identiques aux étages EDᵣ à ED_{NbE-1} du circuit 120, sauf qu'au lieu de manipuler des blocs de 1 bit, ce sont des blocs de 2^{r} bits qui sont manipulés.

Plus précisément, les entrées 126 et 127 de chaque composant CD_{αj,q} pour q supérieur ou égal à r, reçoit des blocs de 2^{r} bits et non pas d'un seul bit. Ainsi, les sorties 122 et 123 des composants CD_{αj,r} délivrent à l'ordonnanceur 134 un code intermédiaire CI, dans lequel chaque bloc BCI_{x,r} de 2' bits est à l'emplacement souhaité, c'est-à-dire à l'emplacement qu'il doit occuper dans le code Cᵣₑₛ₋ₜ.

De plus, chaque bloc BCI_{x,r} est identique à un bloc BC_{y,r} correspondant du code C₁. En effet, le permutateur 131 ne fait que déplacer les blocs BC_{y,r} les uns par rapport aux autres, pour obtenir le code intermédiaire CI. Le permutateur 131 ne permute pas les bits situés à l'intérieur d'un bloc BC_{y,r}. Par la suite, on note y la position du bloc BC_{y,r} qui est identique au bloc BCI_{x,r} situé à la position x dans le code CI.

L'ordre des 2^{r} bits à l'intérieur du bloc BCI_{x,r} est identique à l'ordre des 2^{r} bits à l'intérieur du bloc BC_{y,r} correspondant. L'agencement des 2^{r} bits à l'intérieur du bloc BC_{y,r} résulte de l'application à un bloc BD_{z,r} correspondant, lors du calcul du code C₁, d'une partie des transpositions des étages Eᵣ₋₁ à E₀. Par la suite, on note z la position du bloc BD_{z,r} à partir duquel les positions des bits situés à l'intérieur du bloc BC_{y,r} sont calculées. La position z du bloc BD_{z,r} n'est pas forcement la même que la position y du bloc BC_{y,r} car les transpositions des étages E_{NbE-1} à Eᵣ peuvent avoir déplacé ce bloc BD_{z,r} avant d'y appliquer les transpositions des étages suivants. On note F_{αcy} la composition des transpositions T_{αj,q} des étages Eᵣ₋₁ à E₀ appliquées, lors de la construction du code C₁, aux bits situés à l'intérieur du bloc BD_{z,r} pour obtenir le bloc BC_{y,r}. La clé αc_{y} est un sous-ensemble de la clé α qui contient uniquement les paramètres des transpositions de la fonction F_{αcy}. La clé αc_{y} est par la suite appelée "clé courante" car il c'est elle qui explique l'agencement actuel des bits à l'intérieur du bloc BC_{y,r}. La clé αc_{y} dépend de la position y du bloc BC_{y,r}. Par la suite, on note également αc_{j,q} le paramètre de la transposition T_{αj,q} contenu dans la clé courante αc_{y}.

Dans le code Cᵣₑₛ₋ₚ, l'agencement des 2^{r} bits à l'intérieur du bloc BCR_{x,r} résulte de l'application, au bloc BD_{z,r} correspondant, d'une partie des transpositions des étages Eᵣ₋₁ à E₀. Le bloc BD_{z,r} correspondant est le même que celui qui correspond au bloc BC_{y,r}. On note F_{αsx} la composition de transpositions T_{αj,q} des étages Eᵣ₋₁ à E₀ appliquées, lors de la construction du code Cᵣₑₛ₋ₚ, aux bits situés à l'intérieur du bloc BD_{z,r} pour obtenir le bloc BCR_{x,r}. La clé αsₓ est par la suite appelée "clé souhaité" car il c'est elle qui détermine l'agencement des bits à l'intérieur du bloc BCR_{x,r}. La clé αsₓ dépend de la position x du bloc BCR_{x,r}. Par la suite, on note également αs_{j,q} le paramètre de la transposition T_{αj,q} contenu dans la clé souhaité αs_{y}.

Il résulte des explications ci-dessus que l'agencement des 2^{r} bits à l'intérieur du bloc BCI_{x,r} n'est pas nécessairement identique à l'agencement des 2^{r} bits à l'intérieur du bloc BCR_{x,r} qui occupe la même position x dans le code Cᵣₑₛ₋ₜ. En effet, la clé courante αc_{y} n'est pas nécessairement identique à la clé souhaitée αsₓ. L'ordonnanceur 134 réagence l'ordre des bits à l'intérieur de chaque bloc BCI_{x,r} pour obtenir le bloc BCR_{x,r} souhaité.

Pour expliquer cela, supposons que la donnée D₁ comporte quatre blocs, de 2' bits chacun, notés dans l'ordre BD_{3,r}, BD_{2,r}, BD_{1,r} et BD_{0,r}. On suppose aussi dans cet exemple, que NbE=d=4 et r=2 et que les paramètres α_{0,3}, α_{1,2}, α_{0,2} sont égaux, respectivement, à 1, 1, 0. Le calcul du code C₁ se décompose en une première et une seconde phases successives. Lors de la première phase, ce sont les transpositions des étages E_{NbE-1} à Eᵣ qui sont appliquées. Ainsi, lors de cette première phase, seuls les blocs BD_{z,r} entier de la donnée D₁ sont permutés. Dans cet exemple, à l'issue de cette première phase, l'ordre des blocs BD_{z,r} est le suivant : BD_{0,r}, BD_{1,r}, BD_{3,r} et BD_{2,r}.

Ensuite, lors de la seconde phase, ce sont les transpositions des étages Eᵣ₋₁ à E₀ qui sont appliquées. Cette seconde phase permute seulement les bits à l'intérieur de chacun des blocs BD_{z,r}. Lors de cette seconde phase, aucune transposition appliquée ne déplace un bit situé à l'intérieur d'un bloc BD_{z,r} vers un autre bloc. A l'issue de cette seconde phase, le code C₁ est obtenu. On note dans l'ordre BC_{3,r}, BC_{2,r}, BC_{1,r} et BC_{0,r}, les quatre blocs, de 2^{r} bits chacun, du code C₁ obtenu.

Lors de la seconde phase, les bits du bloc BD_{0,r} sont permutés en appliquant les transpositions des étages Eᵣ₋₁ à E₀, qui s'appliquent uniquement aux 2' bits de poids forts. Cela provient du fait qu'à l'issue de la première phase, le bloc BD_{0,r} se trouve à l'emplacement des bits de poids le plus fort, c'est-à-dire ici à la position y=3. On note F_{αc3} la composition des transpositions des étages Eᵣ₋₁ à E₀ qui s'appliquent seulement aux 2' bits de poids forts. De façon similaire, on note F_{αc2}, F_{αc1} et F_{αc0}, les compositions de transposition des étages Eᵣ₋₁ à E₀ qui permutent seulement les bits situés à l'intérieur, respectivement, des blocs BD_{1,r}, BD_{3,r} et BD_{2,r}. Ainsi, on remarque que le bloc BC_{3,r} du code C₁ est le résultat de l'application de la fonction F_{αc3} aux bits du bloc BD_{0,r}. De façon similaire, les blocs BC_{2,r}, BC_{1,r} et BC_{0,r} du code C₁ sont les résultats de l'application des fonctions F_{αc2}, F_{αc1} et F_{αc0} aux blocs, respectivement, BD_{1,r}, BD_{3,r} et BD_{2,r}.

Suite au décalage logique de 2^{r} bits vers la gauche, le résultat Dᵣₑₛ₋ₚ est égal à la concaténation, dans l'ordre, des blocs BD_{2,r}, BD_{1,r}, BD_{0,r} et d'un bloc [0] de 2^{r} bits nuls.

L'application de la fonction F_{α} au résultat Dᵣₑₛ₋ₚ pour calculer le code Cᵣₑₛ₋ₚ se décompose, de façon similaire, en une première phase puis une seconde phase. A l'issue de la première phase, les blocs du résultat Dᵣₑₛ₋ₚ sont classés dans l'ordre suivant : [0], BD_{0,r}, BD_{z,r} et BD_{1,r}. Lors de la seconde phase, les fonctions F_{αs3} à F_{αs0} sont appliquées, respectivement, au blocs [0], BD_{0,r}, BD_{z,r} et BD_{1,r}. Ainsi, les blocs BCR_{3,r}, BCR_{2,r}, BCR_{1,r}, BCR_{0,r} du code Cᵣₑₛ₋ₚ sont les résultats de l'application des fonctions F_{αs3} à F_{αs0}, respectivement, aux blocs [0], BD_{0,r}, BD_{2,r} et BD_{1,r}.

Le code intermédiaire CI délivré par le permutateur 131 est la concaténation, dans l'ordre, des blocs [0], BC_{0,r}, BC_{z,r} et BC_{1,r}. Le bloc BCI_{z,r} est le résultat de l'application de la fonction F_{αc3} au bloc BD_{0,r}. Le bloc souhaité BCR_{2,r}, qui occupe la même position dans le code Cᵣₑₛ₋ₚ, est le résultat de l'application de la fonction F_{αs2} au bloc BD_{0,r}. Ainsi, dans le cas du bloc BCI_{2,r}, le rôle de l'ordonnanceur 134 est d'annuler l'application des transpositions de la fonction F_{αc3} et d'appliquer à la place les transpositions de la fonction F_{αs2} pour obtenir le bloc BCR_{2,r} souhaité.

Pour cela, par exemple, pour chaque étage Eᵣ₋₁ à E₀ de la fonction F_{α}, l'ordonnanceur 134 comporte un étage correspondant à EOᵣ₋₁ à EO₀. Chaque étage EO_{q} comporte 2^{d-q-1} comparateurs CO_{j,q}. Chaque comparateur CO_{j,q} est associé à la transposition T_{αj,q} correspondante qui permute les blocs les blocs BCI_{2j+1,q} et BCI_{2j,q} du code intermédiaire CI lorsque la valeur de son paramètre est égale à un. La taille des blocs BCI_{2j+1,q} et BCI_{2j,q} est égale à 2^{q}. Pour simplifier la figure 11, seule une partie de ces comparateurs est représentée. Chaque comparateur CO_{j,q} reçoit le bloc BCI_{j,q+1}, le paramètre αc_{j,q} de la clef courante et le paramètre αs_{j,q} de la clef souhaitée. Si ces deux paramètres sont égaux, le comparateur CO_{j,q} délivre en sortie les blocs BCI_{2j+1,q} et BCI_{2j,q}, respectivement, aux comparateurs CO_{2j+1,q-1} et CO_{2j,q-1}. Autrement dit, les transpositions T_{αcj,q} et T_{αsj,q} sont identiques et aucun changement de l'ordre des bits n'est nécessaire. Si les deux paramètres αc_{j,q} et αs_{j,q} sont différents, le comparateur CO_{j,q} permute les positions des blocs BCI_{2j+1,q} et BCl_{2j,q} avant de les délivrer, respectivement, aux comparateurs CO_{2j+1,q-1} et CO_{2j,q-1}. Cela remplace la transposition T_{αcj,q} par la transposition T_{αsj,q}. En procédant ainsi en allant de l'étage EOᵣ₋₁ jusqu'à l'étage EO₀, le code Cᵣₑₛₜ₋ₜ est obtenu sur les sorties des comparateurs CO_{j,0} de l'étage EO₀. Sur la figure 11, les bits du code Cᵣₑₛₜ₋ₜ calculé par le circuit 130 sont désignés par les références a₇ à a₀.

Les clés courantes αc et souhaitée αs sont par exemple obtenues comme suit. La clé α est divisée en 2' blocs BK_{z,r} de 2^{r} bits chacun. Chaque bloc BK_{z,r} contient uniquement les paramètres α_{j,r-1} à α_{j,0} des transpositions à appliquer, lors du calcul du code C₁, aux bits situés à l'intérieur du bloc respectif BD_{z,r} de la donnée D₁. A l'intérieur de chaque bloc BK_{z,r}, les paramètres α_{j,r-1} à α_{j,0} sont classés dans un ordre prédéterminé. Par exemple, ici, ils sont d'abord classés par ordre décroissant d'étages et les différents paramètres α_{j,q} d'un même étage E_{q} sont classés aussi par ordre décroissant d'indice j. La clé souhaité αs est égale à la clé α dans laquelle les paramètres sont classés comme décrit ci-dessus. Ensuite, les différents blocs BK_{z,r} sont permutés, par exemple, par un circuit identique au permutateur 131. La clé contenant les blocs BK_{z,r} ainsi permutés est égale à la clé courante αc. Les paramètres αc_{j,q} et αs_{j,q} sont les paramètres qui occupent la même position, respectivement, dans la clé courante αc et la clé souhaitée αs.

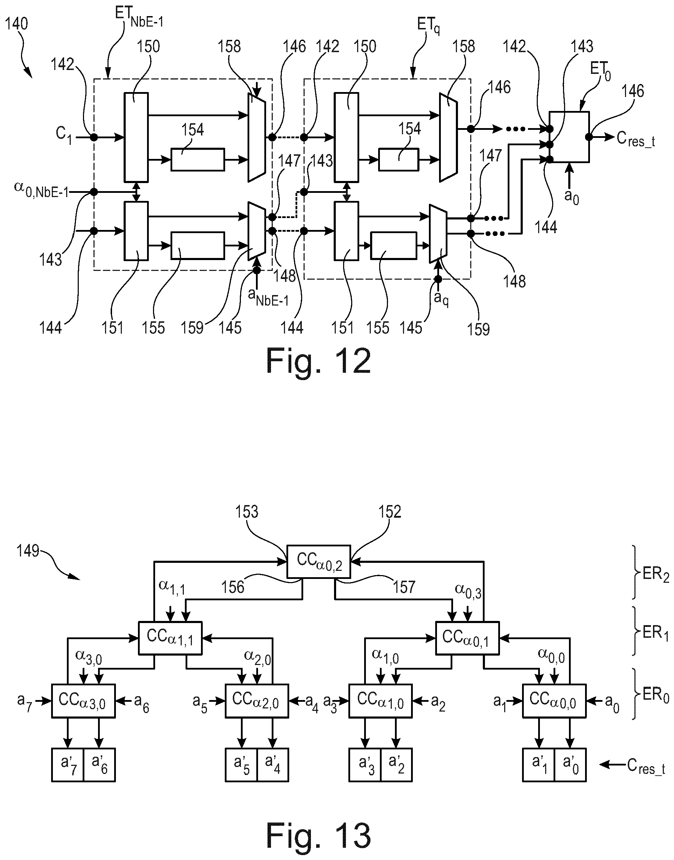

La figure 12 représente le circuit 140 de calcul du code Cᵣₑₛ₋ₜ à partir du code C₁ dans le cas où l'instruction arithmétique exécutée par l'unité 10 est une instruction de décalage de a_{NbE-1}2^{NbE-1} + ... + a_{q}2^{q} + ... + a₀2⁰ bits vers la gauche de la donnée D₁. Les coefficients a_{NbE-1} à a₀ sont des coefficients dont les valeurs booléennes sont déterminées et fixées à l'avance. Le circuit 140 calcule un code Cᵣₑₛ₋ₜ qui est égal au résultat Dᵣₑₛ₋ₚ si aucune faute d'exécution ne se produit. Ainsi, dans ce mode de réalisation, lors de l'étape 100, le code Cᵣₑₛ₋ₚ est égal au résultat Dᵣₑₛ₋ₚ.

Le circuit 140 comporte pour chaque étage E_{q} de la fonction F_{α}, un étage ET_{q}. Chaque étage ET_{q} comporte quatre entrées 142 à 145 et trois sorties 146 à 148. L'entrée 142 reçoit un code CP_{q} à permuter. Chaque code CP_{q} comporte 2^{d-q} blocs BCP_{j,q}, chacun de 2^{q} bits. Ces blocs BCP_{j,q} ne se chevauchent pas et sont immédiatement consécutifs. L'indice j est égal au numéro d'ordre du bloc BCP_{j,q} compté à partir du bloc BCP_{0,q} qui contient les bits de poids le plus faible.

Chaque entrée 142 est raccordée à la sortie 146 de l'étage précédent ET_{q+1}, sauf l'entrée 142 de l'étage ET_{NbE-1} qui reçoit le code C₁ sur son entrée 142.

L'entrée 143 reçoit les paramètres α_{j,q} de l'étage E_{q} de la fonction F_{α}. Ici, à cet effet, l'entrée 143 de l'étage ET_{q} est raccordée à la sortie 147 de l'étage précédent ET_{q+1}.

L'entrée 144 reçoit une clef K_{ETq} de permutation qui contient seulement les paramètres α_{j,q-1} à α_{j,0} nécessaires pour la mise en oeuvre des transpositions des étages E_{q-1} à E₀ de la fonction F_{α}. Cette clef K_{ETq} est divisée en 2^{d-q} blocs BK_{j,q} de 2^{q} bits chacun. Chaque bloc BK_{j,q} contient uniquement les paramètres α_{j,q-1} à α_{j,0} des transpositions à appliquer aux bits situés à l'intérieur du bloc B_{j,q} de la donnée D₁. A l'intérieur de chaque bloc BK_{j,q}, les paramètres α_{j,q-1} à α_{j,0} sont classés dans un ordre prédéterminé. Par exemple, ici, ils sont d'abord classés par ordre décroissant d'étages et les différents paramètres α_{j,q-1} d'un même étage E_{q-1} sont classés aussi par ordre décroissant d'indice j. Par exemple, supposons que q = 3, les transpositions à appliquer au bloc B_{2,3} sont, successivement, les transpositions T_{α2,2}, T_{α5,1}, T_{α4,1}, T_{α11,0}, T_{α10,0}, T_{α9,0} et T_{α8,0}. Ceci découle de l'organisation des transpositions T_{αj,q} dans la fonction F_{α} décrite en référence à la figure 3. Dès lors, le bloc BK_{2,3} comporte les paramètres α_{2,2}, α_{5,1}, α_{4,1}, α_{11,0}, α_{10,0}, α_{9,0} et α_{8,0} et un 0 supplémentaire pour atteindre la taille de 2³ bits.

L'entrée 145 reçoit le coefficient a_{q} du décalage à appliquer à la donnée D₁.

L'étage ET_{q} comporte deux permutateurs 150 et 151, deux registres à décalage 154 et 155 et deux multiplexeurs 158 à 159.

Le permutateur 150 exécute les transpositions de l'étage E_{q} sur les données reçues sur son entrée 142. Autrement dit, le permutateur 150 exécute la fonction suivante : T_{αm,q}o...oT_{αj,q}o...oT_{α0,q}(CP_{q}), où m est égal à 2^{d-q-1}.

Pour faire cela, le permutateur 151 est raccordé à l'entrée 142 pour recevoir le code CP_{q} à permuter et à l'entrée 143 pour recevoir les paramètres α_{m,q} à α_{0,q}.

Le code permuté par le permutateur 150 est transmis directement sur une première entrée du multiplexeur 158 et, en parallèle, sur une entrée du registre 154.

Le registre 154 réalise un décalage logique de 2^{q} bits vers la gauche des bits reçus sur son entrée pour obtenir un code permuté et décalé qui est délivré sur une seconde entrée du multiplexeur 158.

Le multiplexeur 158 raccorde la première entrée directement à la sortie 146 si le coefficient a_{q} reçu l'entrée 145 est égal à zéro. Si le coefficient a_{q} reçu est égal à un, le multiplexeur 158 raccorde directement sa seconde entrée à la sortie 146.

Le permutateur 151 et le registre 155 sont identiques, respectivement, au permutateur 150 et au registre 154. Ils réalisent donc les mêmes opérations que, respectivement, le permutateur 150 et le registre 154, mais appliquées à la clef K_{ETq}, c'est-à-dire à la clef reçue sur l'entrée 144.

Le multiplexeur 159 sélectionne la clef permutée délivrée par le permutateur 151 si le coefficient a_{q} est égal à zéro. Dans le cas contraire, il sélectionne la clef permutée et décalée délivrée par le registre 155. De plus, à partir de la clef sélectionnée en fonction du coefficient a_{q}, le multiplexeur 159 délivre sur la sortie 147, les paramètres α_{j,q-1} nécessaires au paramétrage des transpositions de l'étage ET_{q-1}. Il délivre aussi sur la sortie 148, la clef K_{ETq-1}.

Le fonctionnement du circuit 140 est le suivant : le permutateur 150 de l'étage ET_{q} annule l'effet des transpositions T_{j,q} de l'étage E_{q} appliqué à la donnée D₁ lors du calcul du code C₁. Il est ici rappelé que T_{j,q} o T_{j,q} est la fonction identité. Ainsi, dans le code permuté délivré par le permutateur 150, les blocs BCP_{j,q} occupent la même position que celle qui était la leur dans la donnée D₁. Par contre, à l'intérieur de chaque bloc BCP_{j,q}, la position des bits correspond au résultat de l'application des transpositions des étages E_{j,q-1} à E_{j,0} aux bits situés à l'intérieur du bloc B_{j,q} de la donnée D₁. Ainsi, l'ordre des bits à l'intérieur des blocs BCP_{j,q} n'est pas le même que l'ordre des bits à l'intérieur du bloc B_{j,q} de la donnée D₁. Toutefois, cela n'a aucune importance pour l'application d'un décalage logique de 2^{q} bits à gauche, puisqu'un tel décalage décale seulement des blocs de 2^{q} bits. Ainsi, le fait d'appliquer le décalage de 2^{q} bits au niveau de l'étage ET_{q} permet de calculer le code Cᵣₑₛ₋ₜ sans avoir pour cela :
- à retrouver la donnée D₁ à partir du code C₁, puis
- à appliquer à cette donnée D₁ retrouvée les différents décalages logiques de 2^{q} bits.

Dans ce mode de réalisation, les paramètres α_{j,q-1} à α_{j,0} nécessaires pour paramétrer toutes les transpositions T_{j,q-1} à T_{j,0} à appliquer aux bits situés à l'intérieur d'un bloc BCP_{j,q} reçu sur l'entrée 142, sont situés à l'intérieur du bloc BK_{j,q} de même taille et qui occupe la même position j dans la clef K_{ETq} reçue sur l'entrée 144. Sur la sortie 148, cette relation entre la position des blocs BCP_{j,q-1} et la position des blocs BK_{j,q-1} est conservée. Autrement dit, dans la clef délivrée sur la sortie 148, le bloc BK_{j,q-1} contient tous les paramètres α_{j,q-2} à α_{j,0} nécessaires pour paramétrer les transpositions à appliquer aux bits situés à l'intérieur du bloc BCP_{j,q-1} délivré sur la sortie 146.

Pour conserver cette relation, le permutateur 151 et le registre 155 appliquent, respectivement, les mêmes transpositions et les mêmes décalages que ceux appliqués au code CP_{q}, mais cette fois-ci à la clef K_{ETq} reçue. Ensuite, le multiplexeur 159 extrait de la clef sélectionnée les paramètres α_{j,q-1} à délivrer sur la sortie 147. Le multiplexeur 159 extrait aussi les paramètres α_{j,q-2} à α_{j,0} et génère la clef K_{ETq-1} délivrée sur la sortie 148. Ici, le multiplexeur 159 identifie les paramètres α_{j,q} à extraire à partir de leur position dans la clef sélectionnée.

La sortie 146 de l'étage ET₀ délivre le code Cᵣₑₛ₋ₜ à comparer au code Cᵣₑₛ₋ₚ pour vérifier, lors de l'étape 100, que l'exécution de l'instruction de décalage s'est déroulée sans faute.

La figure 13 représente un circuit 149 de calcul du code Cᵣₑₛ₋ₜ dans le cas où l'instruction arithmétique exécutée par l'unité 10 est une instruction de rotation de un bit vers la gauche des bits de la donnée D₁. Cette instruction de rotation est identique à l'instruction de décalage de un bit vers la gauche, sauf que le bit de poids le plus fort de la donnée D₁ est réinjecté à droite et devient donc le bit de poids le plus faible après l'exécution de cette rotation.

Le circuit 149 comporte, pour chaque étage E_{q} de la fonction F_{α}, un étage ER_{q} correspondant. Chaque étage ER_{q} comporte un composant CC_{αj,q} pour chaque transposition T_{αj,q} de l'étage E_{q}. Plus précisément, chaque composant CC_{αj,q} est associé à une transposition respective T_{αj,q} correspondante.

Pour q inférieur à NbE-2, chaque composant CC_{αj,q} est identique au composant CD_{αj,q} du circuit 120. Le composant CC_{α0,NbE-1} est représenté sur la figure 13 dans le cas particulier où NbE est égal à trois. Sur la figure 13, il est donc désigné par la référence CR_{α0,2}. Le composant CC_{α0,NbE-1} comporte deux entrées 152 et 153 et deux sorties 156 et 157. Les entrées 152 et 153 sont raccordées, respectivement, aux sorties 124 des composants CC_{α0,NbE-2} et CC_{α1,NbE-2}. Les sorties 156 et 157 sont raccordées, respectivement, aux entrées 129 des composantes CC_{α1,NbE-2} et CC_{α0,NbE-2}.

La sortie 156 délivre systématiquement la même valeur que celle reçue sur l'entrée 152. La sortie 157 délivre systématiquement la même valeur que celle reçue sur l'entrée 153. Autrement dit, le composant CC_{α0,NbE-1} inverse systématiquement la position des bits reçus sur ses entrées. Cela permet de réinjecter le bit de poids fort à l'emplacement prévu pour recevoir le bit de poids faible.

Le fonctionnement du circuit 149 se déduit des explications données pour le circuit 120.

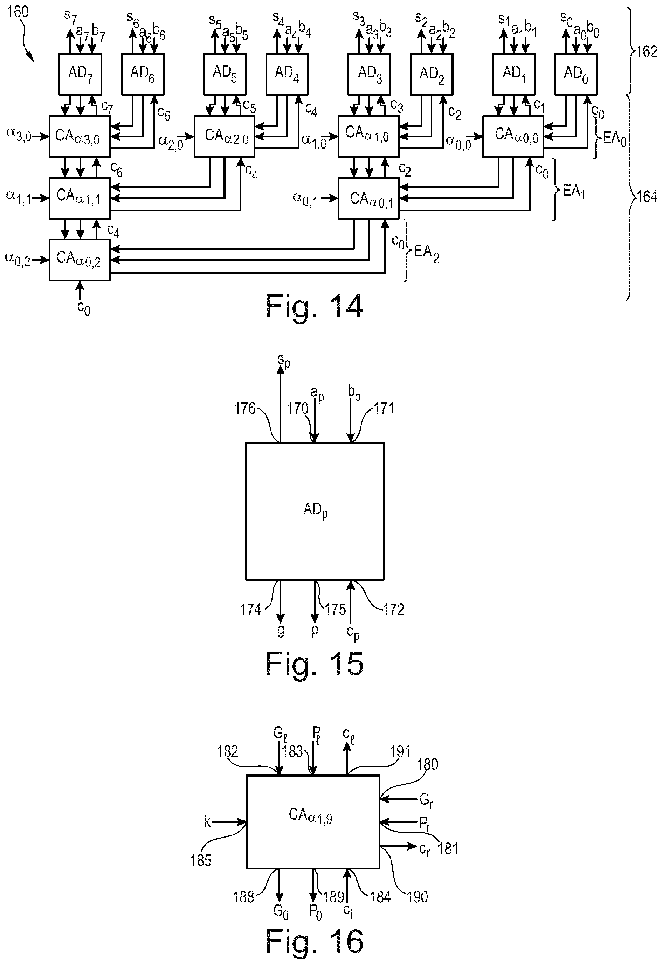

La figure 14 représente le circuit 160 de calcul du code Cᵣₑₛ₋ₜ dans le cas où l'instruction arithmétique exécutée par l'unité 10 est une instuction d'addition des données D₁ et D₂. Le code Cᵣₑₛ₋ₜ est calculé cette fois-ci à partir des codes C₁ et C₂. Le circuit 160 calcule le code Cᵣₑₛ₋ₜ qui, en absence de faute exécution, est égal à F_{α}(Dᵣₑₛ₋ₚ).

La figure 14 représente le circuit 160 dans le cas particulier où la taille des codes C₁, C₂ et du code Cᵣₑₛ₋ₜ est égale à 8 bits. Sur cette figure, les 8 bits des codes C₁ et C₂ sont notés, dans l'ordre allant vers le bit de poids le plus fort, respectivement, a₀ à a₇ et b₀ à b₇. Les 8 bits du code Cᵣₑₛ₋ₜ calculé sont notés, dans le même ordre, s₀ à s₇.

Le circuit 160 comporte un étage 162 d'additionneurs et une unité 164 à retenue anticipée.

L'étage 162 comporte un additionneur ADₚ pour chaque paire de bits aₚ, bₚ à additionner. L'indice p désigne la position des bits dans les codes C₁, C₂ et Cᵣₑₛ₋ₜ. Ces additionneurs ADₚ sont structurellement identiques les uns aux autres et différent les uns des autres uniquement par les bits aₚ et bₚ qu'ils additionnent.

L'additionneur ADₚ est représenté plus en détail sur la figure 15. L'additionneur ADₚ comporte trois entrées 170 à 172 et trois sorties 174 à 176. Les entrées 170 et 171 reçoivent les bits, respectivement, aₚ et bₚ.

L'entrée 172 reçoit une retenue cₚ à prendre en compte dans l'addition des bits aₚ et bₚ.

La sortie 174 délivre le résultat aₚ.bₚ. La sortie 175 délivre le résultat aₚ + bₚ. La sortie 176 délivre le bit sₚ. Le bit sₚ est calculé par additionneur ADₚ à l'aide de la relation suivante : sₚ = aₚXOR bₚXOR cₚ.

L'unité 164 a pour fonction de rapidement propager les différentes retenues cₚ à prendre en compte par les additionneurs ADₚ. Pour cela, ici, l'unité 164 calcule les retenues cₚ à partir des informations délivrées sur les sorties 174 et 175 de chaque additionneur ADₚ.

Dans ce mode de réalisation, l'unité 164 comporte un étage EA_{q} pour chaque étage E_{q} de la fonction F_{α}. Chaque étage EA_{q} comporte 2^{d-q-1} composants CA_{αj,q}, où l'indice j est le numéro d'ordre du composant CA_{αj,q} dans l'étage EA_{q}. Chaque composant CA_{αj,q} est associé à une transposition respective T_{αj,q} de la fonction F_{α}.

Ici, les composants CA_{αj,q} sont tous structurellement identiques les uns aux autres et se différencient seulement par leur raccordement avec les autres composants du circuit 160.

Le composant CA_{αj,q} est représenté plus en détail sur la figure 16. Le composant CA_{αj,q} comporte six entrées 180 à 185 et quatre sorties 188 à 191. La sortie 188 délivre le résultat (Gᵣ+Pᵣ.Gₗ).k+(Gₗ + Pₗ.Gᵣ).k', où Gᵣ, Pᵣ, Gₗ, Pₗ et k sont les valeurs reçues, respectivement, sur les entrées 180, 181, 182, 183 et 185.

La sortie 189 délivre le résultat Pₗ.Pᵣ. La sortie 190 délivre le résultat cᵢ.k' + (Gₗ+ Pₗ.cᵢ).k, où cᵢ est la valeur reçue sur l'entrée 184. La sortie 191 délivre le résultat cᵢ.k + (Gᵣ + Pᵣ.cᵢ).k'.

L'entrée 185 reçoit le paramètre α_{j,q} de la transposition T_{αj,q} associée à ce composant CA_{αj,q}.

Les entrées 180 et 181 de chaque composant CA_{αj,0} de l'étage EA₀ sont raccordées aux sorties, respectivement, 174 et 175 de l'additionneur AD₂ⱼ. Les entrées 182 et 183 de chaque composant CA_{αj,0} de l'étage EA₀ sont raccordées aux sorties, respectivement, 174 et 175 de l'additionneur AD₂ⱼ₊₁.

Les sorties 190 et 191 de chaque composant CA_{αj,0} de l'étage EA₀ sont raccordées aux entrées 172, respectivement, des additionneurs AD₂ⱼ et AD₂ⱼ₊₁.

Pour q supérieur à zéro :
- les entrées 180 et 181 de chaque composant CA_{αj,q} de l'étage EA_{q} sont raccordées aux sorties, respectivement, 188 et 189 du composant CA_{α2j,q-1} de l'étage inférieur EA_{q-1},
- les entrées 182 et 183 de chaque composant CA_{αj,q} sont raccordées aux sorties 188 et 189 du composant CA_{α(2j+1),q-1} de l'étage inférieur EA_{q-1},
- les sorties 190 et 191 de chaque composant CA_{αj,q} sont raccordées aux entrées 184, respectivement, des composants CA_{α2j,q-1} et CA_{α(2j+1),q-1} de l'étage ET_{q-1}.

Les sorties 188 et 189 du composant CA_{α0,NbE-1} ne sont pas utilisées. L'entrée 184 du composant CA_{α0,NbE-1} permet de recevoir la retenue calculée par un autre circuit, par exemple identique au circuit 160. Cela permet d'enchaîner plusieurs circuits 160 les uns aux autres, de manière à réaliser des additions sur des données de plus grande taille.

L'unité 164 fonctionne comme une unité conventionnelle de calcul de retenue anticipée, connue sous le terme anglais de *« carry look-ahead* ». Ici, cette unité conventionnelle est cependant modifiée pour tenir compte des transpositions T_{αj,q} et donc des paramètres α_{j,q} utilisés pour le calcul du code Cᵣₑₛ₋ₜ. En résumé, les composants CA_{αj,q} propagent la retenue vers la droite lorsque le paramètre α_{j,q} est égal à zéro et vers la gauche lorsque le paramètre α_{j,q} est égal à un.

### CHAPITRE IV- VARIANTES :

### Variantes de la fonction Q_{α} :

Dans la relation Q_{α}(Dᵢ) = P o F_{α}(Dᵢ), la fonction P n'est pas nécessairement la fonction identité. Par exemple, la fonction P est une fonction de compression qui construit, à partir de chacun des bits du résultat F_{α}(Dᵢ), un code Cᵢ dont la taille, en nombre de bits, est inférieure à 2^{d}. En effet, lorsque la fonction P est la fonction identité, la taille du code Cᵢ est égale à la taille de la donnée Dᵢ, c'est-à-dire égale à 2^{d}. Or, dans certains contextes, il est souhaitable de diminuer la taille du code Cᵢ. Par exemple, cela est souhaitable pour diminuer la place qu'il peut prendre dans la mémoire cache 27. A titre d'illustration, à cet effet, la fonction P est la fonction qui réalise les opérations suivantes :
1) la fonction P découpe le résultat F_{α}(Dᵢ) en deux blocs p₀ et p₁ de bits de même taille, puis,
2) la fonction P réalise un "OU EXCLUSIF" entre les blocs p₀ et p₁.
Dans ce cas, la taille du code Cᵢ est divisée par deux et est égale à 2^{d-1}.

De nombreuses autres fonctions P de compression sont possibles. La fonction P peut aussi être différente de la fonction identité et d'une fonction de compression. Par exemple, la fonction P est une fonction de chiffrement ou autre.

Dans le cas où la fonction P est différente de la fonction identité, chacun des circuits de calcul décrits ici est décomposé en un premier et un second sous-circuits. Le premier sous-circuit est identique à l'un des circuits de calcul précédemment décrits. Ce premier sous-circuit délivre donc un code Cᵣₑₛ₋ᵢₙₜ qui est, en absence de faute d'exécution, systématiquement égal au résultat F_{α}(Dᵣₑₛ₋ₚ). Le second sous-circuit applique la fonction P prédéterminée au code Cᵣₑₛ₋ᵢₙₜ pour obtenir le code Cᵣₑₛ₋ₜ.

Par la suite, les différentes variantes sont décrites dans le cas particulier où la fonction P est égale à la fonction identité. Toutefois, ces variantes s'appliquent aussi au cas où la fonction P est différente de la fonction identité.

En variante, la transposition T_{αj,q} permute les blocs B_{2j+1,q} et B_{2j,q} lorsque le paramètre α_{j,q} = 0 et ne les permute pas lorsque le paramètre α_{j,q} = 1.

La fonction F_{α} a été décrite dans le cas particulier où les étages de transpositions transposent d'abord les blocs de plus grande taille et se terminent par la transposition des blocs de plus petite taille. Toutefois, en variante, les étages E_{q} de transpositions peuvent être exécutés et classés dans l'ordre inverse. Dans ce cas, on applique d'abord les transpositions de plus petite taille et on finit par appliquer la transposition T_{α0,NbE-1} de plus grande taille. L'ordre dans lequel sont classés les différents étages E_{q} ne modifie pas la propriété de localité des bits précédemment décrite. Ainsi, même dans le cas où l'ordre des étages E_{q} est inversé, il est possible de construire des circuits de calcul du code Cᵣₑₛ₋ₜ rapides et simples pour les instructions arithmétiques.

En variante, un ou plusieurs étages de la fonction F_{α} sont omis.

Certaines des transpositions T_{αj,q} peuvent être omises. Dans ce cas, au moins l'un des étages comporte moins de 2^{d-q-1} transpositions T_{αj},_{q}.

### Variantes des circuits de calcul du code Cᵣₑₛ₋ₜ :

L'enseignement donné ici dans le cas de quelques instructions arithmétiques, telles que des décalages, des rotations et des additions, peut être appliqué à d'autres instructions arithmétiques. En particulier, il est possible à partir de l'enseignement donné dans ces cas particuliers de développer des circuits de calcul d'un code Cᵣₑₛ₋ₜ pour d'autres instructions arithmétiques. Par exemple, le circuit 120 peut être modifié pour calculer le code Cᵣₑₛ₋ₜ correspondant à une instruction de décalage logique de 1 bit vers la droite. En pratique, pour cela, il suffit de conserver le même circuit que le circuit 120, mais d'envoyer sur l'entrée 128 ou 138 de chacun des composants CD_{αj,q} le complément du paramètre α_{j,q} c'est-à-dire le paramètre α_{j,q}'.

De même, il est possible de construire un circuit de calcul du code Cᵣₑₛ₋ₜ pour une instruction de décalage arithmétique de un bit vers la gauche ou vers la droite. Un décalage arithmétique se distingue des décalages logiques précédemment décrits, par le fait que le bit de poids fort reste inchangé et n'est donc pas décalé, contrairement aux autres bits.

Dans le circuit 140, chaque registre à décalage de 2^{q} bits peut être remplacé par un registre qui réalise une rotation de 2^{q} bits. Le circuit ainsi obtenu calcule le résultat Cᵣₑₛ₋ₜ qui correspond à une instruction de rotation des bits de la donnée D₁ de a_{NbE-1}2^{NbE-1}+....+a_{q}2^{q}+...+a₀ bits vers la gauche. En remplaçant ces registres par des registres qui réalisent un décalage vers la droite ou une rotation vers la droite, le circuit obtenu calcule le code Cᵣₑₛ₋ₜ correspondant une instruction de décalage ou de rotation de a_{NbE-1}2^{NbE-1}+....+a_{q}2^{q}+...+a₀ bits vers la droite.

Il est aussi possible d'enchaîner plusieurs circuits de calculs pour calculer le code Cᵣₑₛ₋ₜ d'une opération qui correspond à la composition de plusieurs sous-opérations pour chacune desquelles il existe déjà un circuit de calcul du code Cᵣₑₛ₋ₜ. Par exemple, si l'opération exécutée est une instruction de décalage logique de deux bits à gauche, le code Cᵣₑₛ₋ₜ est calculé en appliquant deux fois le circuit 120. Pour cela, le code C₁ est d'abord injecté sur les entrées du circuit 120 et un premier code CI_{cres-t} intermédiaire est obtenu. Ensuite, le code CI_{cres-t} est injecté sur les entrées de ce même circuit 120 pour obtenir le code Cᵣₑₛ₋ₜ souhaité.

De façon similaire, les circuits 120 et 130 peuvent être enchaînés pour calculer le code Cᵣₑₛ₋ₜ d'un décalage logique à gauche d'un nombre quelconque de bits.

Si les coefficients a_{q} sont systématiquement constants, en variante, les entrées 145 du circuit 140 sont omises. Dans ce cas, les coefficients a_{q} sont câblés à l'intérieur de chaque étage ET_{q}. Par exemple, le multiplexeur 158 est omis. Si la valeur du coefficient a_{q} est systématiquement égale à un, alors la sortie du registre 154 est directement raccordée à la sortie 146. Le multiplexeur 159 est aussi simplifié, puisqu'il sélectionne systématiquement la sortie du registre 155. A l'inverse, si le coefficient a_{q} est systématiquement égal à zéro, alors la sortie du permutateur 150 est directement raccordée à la sortie 146 et le registre 154 est omis. De même, le registre 155 est omis.

En variante, le composant CA_{α0,NbE-1} du circuit 160 est dépourvu des sorties 188 et 189, qui ne sont pas utilisées.

En variante, la sortie 175 du composant ADₚ délivre le résultat aₚ XOR bₚ et non pas le résultat aₚ + bₚ.

Dans un mode de réalisation simplifié, seule l'exécution de certaines instructions arithmétiques ou logiques sont sécurisées. Par exemple, seule l'exécution d'une des instructions suivantes est sécurisée en mettant en oeuvre le procédé décrit ici : l'instruction de décalage des bits, l'instruction de rotation des bits et l'instruction d'addition des bits. L'exécution des autres instructions, telles que les instructions logiques, n'est alors pas sécurisée. Dans ce dernier cas, cela veut dire que pour ces autres instructions, aucun code Cᵣₑₛ₋ₜ n'est calculé et l'étape 100 est omise.

### Autres variantes :

Le module 28 n'est pas nécessairement un module matériel d'un seul bloc. En variante, il est composé de plusieurs sous-modules matériels remplissant chacun l'une des fonctions spécifiques du module 28. Ces sous-modules matériels sont alors de préférence implantés au plus proche des données qu'ils traitent. Par exemple, dans ce cas, le sous-module matériel qui calcul le code Cᵢ associé à chaque donnée Dᵢ est implanté dans la mémoire cache 27. Dès lors, le calcul du code Cᵢ associé à chaque donnée Dᵢ enregistrée dans la mémoire cache 27 est calculé localement dans cette mémoire cache.

En variante, chaque instruction du code machine est aussi associée à un code d'intégrité F_{α}(Iᵢ) calculé à partir de la valeur de l'instruction Iᵢ chargée. Ce code F_{α}(Iᵢ) est vérifié juste avant que l'unité 10 exécute l'instruction Iᵢ. Cela permet de déclencher le signalement d'une faute d'exécution si l'instruction Iᵢ est modifiée dans la file 22.

Il est possible d'associer le code Cᵢ à la donnée Dᵢ de différentes manières. Par exemple, au lieu d'enregistrer le code Cᵢ dans le même registre Rᵢ que celui qui contient la donnée Dᵢ, le code Cᵢ est enregistré dans un registre RCᵢ associé au registre Rᵢ et non pas dans le registre Rᵢ.

La clé secrète α peut être modifiée, par exemple, à intervalle régulier.

D'autres modes de réalisation de l'étape 100 sont possibles. Par exemple, le module 28 calcule, comme dans le cas du circuit 140, un code Cᵣₑₛ₋ₜ qui est égal au résultat Dᵣₑₛ₋ₚ en absence de faute d'exécution. Dans ce cas, le code Cᵣₑₛ₋ₜ est calculé à l'aide de la relation suivante : Cᵣₑₛ₋ₜ = F_{α}⁻¹(CIᵣₑₛ₋ₜ), où :
- la fonction F_{α}⁻¹ est l'inverse de la fonction F_{α}, et
- CIᵣₑₛ₋ₜ est le code calculé, par exemple, par les circuits 120, 130, 149 ou 160.

Les différents circuits de calcul du code Cᵣₑₛ₋ₜ décrits ici peuvent être mis en oeuvre indépendamment les uns des autres.

### CHAPITRE V-Avantages des modes de réalisation décrits :

Le calcul du code Cᵢ à l'aide d'une clef secrète α rend le procédé d'exécution du code machine plus robuste vis-à-vis des tentatives d'attaque. En effet, l'attaquant peut alors plus difficilement falsifier le code Cᵣₑₛ₋ₜ pour qu'il corresponde à un code attendu, lorsqu'une faute d'exécution a été volontairement introduite. Ainsi, les procédés décrits précédemment présentent les mêmes avantages en termes de robustesse que celui décrit dans l'article de DEMEYER2019. De plus, le fait d'utiliser une fonction F_{α} qui présente la propriété de localité précédemment décrite permet d'obtenir des circuits de calcul du code Cᵣₑₛ₋ₜ qui sont plus simples et plus rapides que ceux nécessaires pour la mise en oeuvre du procédé de l'article DEMEYER2019.

Les circuits 120, 130, 140, 149 et 160 permettent chacun de calculer simplement et rapidement le code Cᵣₑₛ₋ₜ correspondant à une instruction arithmétique spécifique.

Le circuit 110 permet aussi de calculer simplement et rapidement le code Cᵣₑₛₜ₋ₜ pour toutes les opérations booléennes.

## Revendications

1. Microprocesseur équipé d'une unité arithmétique et logique (10) et d'un module matériel (28) de sécurisation, dans lequel :
a) l'unité arithmétique et logique (10) est apte à exécuter une instruction arithmétique comportant un opcode et un ou plusieurs opérandes qui, lorsqu'elle est exécutée par l'unité arithmétique et logique du microprocesseur, provoque la réalisation d'une opération arithmétique D₁*D₂*...*Dₙ et l'enregistrement du résultat de cette opération dans un registre Rᵣₑₛ₋ₚ, où :
- l'indice n est égal au nombre de données Dᵢ traitées par l'instruction arithmétique, l'indice n étant supérieur ou égal à un,
- D₁ à Dₙ sont des données enregistrées, respectivement, dans des registres R₁ à Rₙ du microprocesseur, la taille, en nombre de bits, de chacune de ces données Dᵢ étant égale à 2^{d}, où d est un entier supérieur à deux,
- les registres R₁ à Rₙ sont les registres désignés par les opérandes de l'instruction arithmétique,
- le symbole « * » est l'opération arithmétique désignée par l'opcode de l'instruction arithmétique,
b) le microprocesseur est configuré pour réaliser les opérations suivantes :
1) pour chaque donnée Dᵢ, le calcul d'un code Cᵢ à l'aide d'une relation Cᵢ = Q_{α}(Dᵢ) et l'association du code Cᵢ calculé à la donnée Dᵢ, la fonction Q_{α} étant une fonction préprogrammée paramétrée par une clé secrète α préenregistrée dans le microprocesseur et connue seulement du microprocesseur,
2) à chaque fois qu'une instruction de chargement d'une donnée Dᵢ dans un registre Rᵢ du microprocesseur est exécutée par le microprocesseur, la donnée chargée Dᵢ est enregistrée dans le registre Rᵢ et le code Cᵢ qui lui est associé est enregistré dans le même registre Rᵢ ou dans un registre associé au registre Rᵢ, puis
3) l'exécution de l'instruction arithmétique et l'enregistrement du résultat Dᵣₑₛ₋ₚ de cette exécution dans le registre Rᵣₑₛ₋ₚ, et le calcul, par le module (28) de sécurisation, d'un code Cᵣₑₛ₋ₜ à l'aide des codes C₁, C₂, ... , Cₙ et sans utiliser le résultat Dᵣₑₛ₋ₚ, puis
4) la vérification que le code Cᵣₑₛ₋ₜ calculé correspond à un code Cᵣₑₛ₋ₚ obtenu à partir du résultat Dᵣₑₛ₋ₚ et le déclenchement du signalement d'une faute d'exécution si le code Cᵣₑₛ₋ₜ ne correspond pas au code Cᵣₑₛ₋ₚ et, dans le cas contraire, l'inhibition de ce signalement,
**caractérisé en ce que** la fonction Q_{α} est définie par la relation suivante : Q_{α}(Dᵢ) = P o F_{α}(Dᵢ), où P est une fonction prédéterminée et F_{α} est une fonction définie par la relation suivante : F_{α}(Dᵢ)= E₀ o...o E_{q} o ... ο E_{NbE-1}(Dᵢ), où chaque fonction E_{q} est un étage de transpositions et l'indice q est un numéro d'ordre compris entre zéro à NbE-1, où NbE est un nombre entier supérieur à un et inférieur ou égal à d, chaque étage E_{q} de transpositions étant défini par la relation suivante : E_{q}(x) = T_{αm,q}o...o T_{αj,q} o ...o T_{α1,q} o T_{α0,q}(x), où :
- x est une variable dont la taille, en nombre de bits, est égale à la taille de la donnée Dᵢ,
- T_{αj,q} est une transposition conditionnelle, paramétrée par le paramètre α_{j,q}, qui permute deux blocs de bits B_{2j+1,q} et B_{2j,q} de la variable x lorsque le paramètre α_{j,q} est égal à une première valeur et qui ne permute pas ces deux blocs de bits lorsque le paramètre α_{j,q} est égal à une seconde valeur, la transposition T_{αj,q} se distinguant de toutes les autres transpositions de la fonction F_{α} par le fait que c'est la seule qui permute les deux blocs B_{2j+1,q} et B_{2j,q} lorsque le paramètre α_{j,q} est égal à la première valeur, les blocs B_{2j+1,q} et B_{2j,q} de toutes les transpositions T_{αj,q} de l'étage E_{q} étant différents les uns des autres et ne se chevauchant pas de sorte que toutes les transpositions T_{αj,q} de l'étage E_{q} peuvent être exécutées en parallèles,
- "m+1" est le nombre total de transpositions T_{αj,q} de l'étage E_{q},
- "j" est un numéro d'ordre identifiant la transposition T_{αj,q} parmi les autres transpositions de l'étage E_{q},
- le symbole "o" désigne l'opération de composition de fonctions,
- la concaténation des bits de tous les paramètres α_{j,q} de tous les étages E_{q} est égale à la valeur de la clé secrète α, et
- pour tous les étages E_{q} pour lesquels q est inférieur à NbE-1 et pour toutes les transpositions T_{αj,q} de cet étage, les blocs B_{2j+1,q} et B_{2j,q} sont situés à l'intérieur d'un même bloc de taille supérieure permuté par une transposition de l'étage supérieur E_{q+1} lorsque le paramètre de cette transposition de l'étage supérieur E_{q+1} est égal à la première valeur.

2. Microprocesseur selon la revendication 1, dans lequel
- le nombre NbE est égal à d,
- les tailles des blocs permutés par toutes les transpositions T_{αj,q} d'un même étage E_{q} sont égales à 2^{q},
- les blocs B_{2j+i,q} et B_{2j,q} permutés par chaque transposition T_{αj,q} sont contigus.

3. Microprocesseur selon la revendication 2, dans lequel l'instruction arithmétique est une instruction de décalage des bits de la donnée D₁ de un bit vers la gauche ou vers la droite et le code Cᵣₑₛ₋ₜ est égal à Q_{α}(Dᵣₑₛ₋ₚ) en absence de faute d'exécution, le module de sécurisation comportant à cet effet un circuit (120) de calcul du code Cᵣₑₛₜ₋ₜ à partir du code C₁ et sans utiliser le résultat Dᵣₑₛ₋ₚ, ce circuit de calcul comportant :
- pour chaque étage E_{q} de la fonction F_{α}, un étage ED_{q} comportant des composants CD_{αj,q}, chaque composant CD_{αj,q} étant associé à une transposition respective T_{αj,q} de l'étage E_{q},
- les composants CD_{αj,q} des étages ED₀ à ED_{NbE-2} étant tous structurellement identiques les uns aux autres et comportant chacun une première (126), une deuxième (127), une troisième (128) et une quatrième (129) entrées et une première (122), une deuxième (123) et une troisième (124) sorties :
- la première sortie (122) délivrant le résultat a.k'+c.k, où :
- "a", "k" et "c" sont les valeurs reçues, respectivement, sur les première (126), troisième (128) et quatrième (129) entrées de ce composant,
- le symbole "+" désigne l'opération logique "OU",
- le symbole "." désigne l'opération logique "ET, et
- le symbole " ' " désigne l'opération logique "NON",
- la deuxième sortie (123) délivrant le résultat b.k+c.k', où "b" est la valeur reçue sur la deuxième entrée (127) de ce composant,
- la troisième sortie (124) délivrant le résultat a.k+b.k',
- le composant CD_{αj,NbE-1} de l'étage ED_{NbE-1} comportant une première (136), une deuxième (137) et une troisième (138) entrées et une première (132) et une seconde (133) sorties :
- les première et seconde sorties (132, 133) délivrant, respectivement, les résultats "a" et "0" lorsque la troisième entrée (138) est égale à "0", où "a" est la valeur reçue sur la première entrée (136) et "0" est la valeur nulle, et
- les première et seconde sorties (132, 133) délivrant, respectivement, les résultats "0" et "b" lorsque la troisième entrée (138) est égale à "1", où "b" est la valeur reçue sur la deuxième entrée (137),
- pour q égal à zéro, les première et deuxième entrées (126, 127) de chaque composant CD_{αj,0} de l'étage ED₀ étant raccordées, respectivement, au 2j-ième bit et au (2j+1)-ième bit du code C₁, et pour q supérieur à zéro, les première et deuxième entrées (126, 127) de chaque composant CD_{αj,q} de l'étage ED_{q} étant raccordées, respectivement, aux troisième sorties (124), respectivement, du 2j-ième et du (2j+1)-ième composants de l'étage ED_{q-1},
- la troisième entrée de chaque composant CD_{αj,q} est raccordée au paramètre α_{j,q} lorsque l'instruction est un décalage à gauche et au complément α_{j,q}' du paramètre α_{j,q} lorsque l'instruction est un décalage à droite,
- pour q supérieur à zéro, la première et la deuxième sorties (122, 123) de chaque composant CD_{αj,q} sont raccordées à la quatrième entrée (129), respectivement, du (2j+1)-ième et du 2j-ième composants de l'étage E_{q-1}, et pour q égal à zéro, la première et la deuxième sorties (122, 123) de chaque composant CD_{αj,0} délivrent, respectivement, le (2j+1)-ième et le 2j-ième bits du code Cᵣₑₛₜ₋ₜ.

4. Microprocesseur selon la revendication 2, dans lequel l'instruction arithmétique est une instruction de décalage des bits de la donnée D₁ de 2^{r} bit vers la gauche ou vers la droite, où r est un nombre entier supérieur à un et inférieur à NbE, et le code Cᵣₑₛ₋ₜ est égal à Q_{α}(Dᵣₑₛ₋ₚ) en absence de faute d'exécution, le module (28) de sécurisation comportant à cet effet un circuit (130) de calcul du code Cᵣₑₛₜ₋ₜ à partir du code C₁ et sans utiliser le résultat Dᵣₑₛ₋ₚ, ce circuit de calcul comportant un permutateur (131) de bloc et un ordonnanceur (134) de bits,
- le permutateur comporte, pour chaque étage E_{q} de transpositions compris dans le groupe des étages Eᵣ à E_{NbE-1} qui permutent des blocs de taille supérieure ou égale à 2^{r}, un étage ED_{q} comportant des composants CD_{αj,q}, chaque composant CD_{αj,q} étant associé à une transposition respective T_{αj,q} de l'étage E_{q},
- les composants CD_{αj,q} des étages EDᵣ à ED_{NbE-2} étant tous structurellement identiques les uns aux autres et comportant chacun une première, une deuxième, une troisième et une quatrième entrées et une première, une deuxième et une troisième sorties :
- la première sortie délivrant le résultat a.k'+c.k, où :
- "a", "k" et "c" sont les valeurs reçues, respectivement, sur les première, troisième et quatrième entrées de ce composant,
- le symbole "+" désigne l'opération logique "OU",
- le symbole "." désigne l'opération logique "ET", et
- le symbole " ' " désigne l'opération logique "NON",
- la deuxième sortie délivrant le résultat b.k+c.k', où "b" est la valeur reçue, sur la deuxième entrée de ce composant,
- la troisième sortie délivrant le résultat a.k+b.k',
- le composant CD_{αj,NbE-1} de l'étage ED_{NbE-1} comportant une première, une deuxième et une troisième entrées et une première et une seconde sorties :
- les première et seconde sorties délivrant, respectivement, les résultats "a" et "0" lorsque la troisième entrée est égale à "0", où "a" est la valeur reçue sur la première entrée et "0" est la valeur nulle, et
- les première et seconde sorties délivrant, respectivement, les résultats "0" et "b" lorsque la troisième entrée est égale à "1", où "b" est la valeur reçue sur la deuxième entrée,
- les première et deuxième entrées de chaque composant CD_{αj,r} de l'étage EDᵣ étant raccordées, respectivement, au 2j-ième bloc de 2^{r} bits et au (2j+1)-ième bloc de 2^{r} bits du code C₁, et pour q supérieur à r, les première et deuxième entrées de chaque composant CD_{αj,q} de l'étage ED_{q} étant raccordées, respectivement, aux troisième sorties, respectivement, du 2j-ième et du (2j+1)-ième composants de l'étage E_{q-1},
- la troisième entrée de chaque composant CD_{αj,q} est raccordée au paramètre α_{j,q} lorsque l'instruction est un décalage à gauche et au complément α_{j,q}' du paramètre α_{j,q} lorsque l'instruction est un décalage à droite,
- pour q supérieur à r, la première et la deuxième sorties de chaque composant CD_{αj,q} sont raccordées à la quatrième entrée, respectivement, du (2j+1)-ième et du 2j-ième composants de l'étage E_{q-1}, et pour q égal à r, la première et la deuxième sorties de chaque composant CD_{αj,r} délivrent, respectivement, le (2j+1)-ième bloc intermédiaire BCI_{2j+1,r} de 2' bits et le 2j-ième bloc intermédiaire BCI_{2j,r} de 2' bits d'un code intermédiaire CIᵣₑₛₜ₋ₜ, chaque bloc BCI_{x,r} étant identique à un bloc respectif BC_{y,r} du code C₁, l'ordre des bits à l'intérieur de ce bloc BC_{y,r} ayant été obtenu, lors du calcul du code C₁, en appliquant un premier jeu de transpositions des étages Eᵣ₋₁ à E₀ à un bloc respectif BD_{z,r} de 2' bits de la données D₁, où les indices x, y et z sont chacun un identifiant d'une position d'un bloc de 2' bits dans une donnée ou un code de 2^{d} bits, l'indice x étant égal à 2j+1 si le numéro d'ordre du bloc de 2' bits est impair et égal à 2j sinon, et le premier jeu de transpositions étant fonction de la position y,
- l'ordonnanceur (134) apte à remplacer chaque bloc intermédiaire BCI_{x,r} du code intermédiaire par une bloc BCR_{x,r} de 2' bits qui est égal au résultat de l'application d'un second jeu de transpositions des étages Eᵣ₋₁ à E₀ au bloc BD_{z,r} de 2' bits de la donnée D₁, le second jeu de transpositions étant fonction de la position x.

5. Microprocesseur selon la revendication 4, dans lequel l'ordonnanceur (134) est apte pour chaque bloc BCI_{x,r} :
- à comparer chaque paramètre d'une clé courante de permutations au paramètre correspondant d'une clé souhaitée de permutation, la clé courante contenant les paramètres de toutes les transpositions du premier jeu de transpositions utilisées, lors du calcul du code C₁, pour permuter les bits situés à l'intérieur du bloc BD_{z,r}, la clé souhaitée contenant les paramètres de toutes les transpositions du second jeu de transpositions utilisées, lors d'un calcul de F_{α}(Dᵣₑₛ₋ₚ), pour permuter les bits situés à l'intérieur du bloc BD_{x,r}, et
- à chaque fois que les paramètres comparés sont différents, à exécuter la transposition paramétrée par ce paramètre sur les bits du bloc BCI_{x,r} et,
- à chaque fois que les paramètres comparés sont identiques, à conserver l'ordre des bits du bloc BCI_{x,r} inchangé.

6. Microprocesseur selon la revendication 2, dans lequel l'instruction arithmétique est une instruction de rotation des bits de la donnée D₁ de un bit vers la gauche ou vers la droite et le code Cᵣₑₛ₋ₜ est égal à Q_{α}(Dᵣₑₛ₋ₚ) en absence de faute d'exécution, le module (28) de sécurisation comportant à cet effet un circuit (149) de calcul du code Cᵣₑₛₜ₋ₜ à partir du code C₁ et sans utiliser le résultat Dᵣₑₛ₋ₚ, ce circuit de calcul comportant :
- pour chaque étage E_{q} de la fonction F_{α}, un étage ED_{q} comportant des composants CC_{αj,q}, chaque composant CC_{αj,q} étant associé à une transposition respective T_{αj,q} de l'étage E_{q},
- les composants CC_{αj,q} des étages ED₀ à ED_{NbE-2} étant tous structurellement identiques les uns aux autres et comportant chacun une première, une deuxième, une troisième et une quatrième entrées et une première, une deuxième et une troisième sorties :
- la première sortie délivrant le résultat a.k'+c.k, où :
- "a", "k" et "c" sont les valeurs reçues, respectivement, sur les première, troisième et quatrième entrées de ce composant,
- le symbole "+" désigne l'opération logique "OU",
- le symbole "." désigne l'opération logique "ET, et
- le symbole " ' " désigne l'opération logique "NON",
- la deuxième sortie délivrant le résultat b.k+c.k', où "b" est la valeur reçue, sur la deuxième entrée de ce composant,
- la troisième sortie délivrant le résultat a.k+b.k',
- le composant CC_{αj,NbE-1} de l'étage ED_{NbE-1} comportant une première (152) et une seconde (153) entrées et une première (156) et une seconde (157) sorties, les première et seconde sorties délivrant, respectivement, les résultats "a" et "b", où "a" et "b" sont les valeurs reçues sur, respectivement, la première (152) et la seconde (153) entrées, et
- pour q égal à zéro, les première et deuxième entrées de chaque composant CC_{αj,0} de l'étage ED₀ étant raccordées, respectivement, au 2j-ième bit et au (2j+1)-ième bit du code C₁, et pour q supérieur à zéro, les première et deuxième entrées de chaque composant CC_{αj,q} de l'étage ED_{q} étant raccordées, respectivement, aux troisième sorties, respectivement, du 2j-ième et du (2j+1)-ième composants de l'étage ED_{q-1},
- la troisième entrée de chaque composant CC_{αj,q} est raccordée au paramètre α_{j,q} lorsque l'instruction est une rotation à gauche et au complément α_{j,q}' du paramètre α_{j,q} lorsque l'instruction est une rotation à droite,
- pour q supérieur à zéro, la première et la deuxième sorties de chaque composant CC_{αj,q} sont raccordées à la quatrième entrée, respectivement, du (2j+1)-ième et du 2j-ième composants de l'étage E_{q-1}, et pour q égal à zéro, la première et la deuxième sorties de chaque composant CC_{αj,0} délivrent, respectivement, le (2j+1)-ième et le 2j-ième bits du code Cᵣₑₛₜ₋ₜ.

7. Microprocesseur selon la revendication 2, dans lequel l'instruction arithmétique est une instruction de décalage des bits de la donnée D₁ de a_{NbE-1}2^{NbE-1}+....+a_{q}2^{q}+... +a₀ bits vers la gauche ou vers la droite, où les coefficients a_{q} sont des coefficients prédéterminés, et le module (28) de sécurisation comporte une unité (140) de calcul du code Cᵣₑₛₜ₋ₜ à partir du code C₁ et sans utiliser le résultat Dᵣₑₛ₋ₚ, ce code Cᵣₑₛₜ₋ₜ étant identique au résultat Dᵣₑₛ₋ₚ en absence de faute d'exécution lors de l'exécution de cette instruction de décalage par l'unité arithmétique et logique, ce circuit de calcul comportant, pour chaque étage E_{q} de la fonction F_{α}, un étage ET_{q}, chaque étage ET_{q} comportant :
- une première entrée (142) pour recevoir un code à permuter, ce code à permuter étant formé d'une juxtaposition de blocs BCP_{y,q} de 2^{q} bits chacun, l'indice y étant le numéro d'ordre du bloc de 2^{q} bits dans cette juxtaposition, cette première entrée recevant le code C₁ dans le cas où q = NbE-1,
- une deuxième entrée (143) pour recevoir les paramètres α_{m,q} à α_{0,q} des transpositions de l'étage E_{q}, cette deuxième entrée recevant les paramètres α_{0,NbE-1} dans le cas où q = NbE-1,
- une troisième entrée (144) pour recevoir une clé de permutation pour les étages suivants, cette clé de permutation étant formée d'une juxtaposition de blocs BK_{y,q} de 2^{q} bits chacun, chaque bloc BK_{y,q} contenant uniquement les paramètres des transpositions des étages suivants E_{q-1} à E₀ qui permutent les bits situés à l'intérieur du bloc BCP_{y,q} du code reçu sur la première entrée, cette troisième entrée recevant la clé α privée du paramètres α_{0,NbE-1} dans le cas où q = NbE-1,
- un premier permutateur (150) apte à exécuter la permutation T_{αm,q} o...o T_{αj,q} o ... o T_{α1,q} o T_{α0,q}(x) pour obtenir un code permuté, où la variable x est égale au code à permuter reçu sur la première entrée (142) et les paramètres de permutation α_{m,q} à α_{0,q} sont ceux reçus sur la deuxième entrée (143),
- un premier registre (154) à décalage apte à réaliser un décalage de 2^{q} bits du code permuté pour obtenir un code permuté et décalé,
- un premier multiplexeur (158) configuré pour sélectionner le code permuté si le coefficient a_{q} est égal à "0" et pour sélectionner le code permuté et décalé si le coefficient a_{q} est égal à "1", ce premier multiplexeur comportant une sortie qui délivre sur la première entrée de l'étage suivant ET_{q-1} le code sélectionné parmi le code permuté et le code permuté et décalé,
- un second permutateur (151) apte à exécuter la permutation T_{αm,q} o...o T_{αj,q} o ... o T_{α2,q} o T_{α0,q}(k) pour obtenir une clé permutée, où la variable k est égale à la clé de permutation reçue sur la troisième entrée (144),
- un second registre (155) à décalage apte à réaliser un décalage de 2^{q} bits de la clé permutée pour obtenir une clé permutée et décalée, les premier et second registres à décalage décalant les bits vers la gauche si l'instruction de décalage est une instruction de décalage des bits vers la gauche et, sinon, décalant les bits vers la droite si l'instruction de décalage est une instruction de décalage des bits vers la droite,
- un second multiplexeur (159) configuré pour sélectionner la clé permutée si le coefficient a_{q} est égal à "0" et pour sélectionner la clé permutée et décalée si le coefficient a_{q} est égal à "1", ce second multiplexeur comportant :
- une première sortie qui délivre, sur la deuxième entrée (143) de l'étage suivant ET_{q-1}, les paramètres α_{m,q-1} à α_{0,q-1} extraits à partir d'emplacements prédéterminés de la clé sélectionnée parmi la clé permutée et la clé permutée et décalée, et
- une seconde sortie qui délivre sur la troisième entrée (144) de l'étage suivant ET_{q-1}, une clé de permutation pour les étages suivant comportant les paramètres α_{m,q-2} à α_{0,0} extraits à partir d'emplacements prédéterminés de la clé sélectionnée parmi la clé permutée et la clé permutée et décalée, la clé de permutation délivrée sur la seconde sortie étant formée d'une juxtaposition de blocs BK_{y,q-1} de 2^{q-1} bits chacun, chaque bloc BK_{y,q-1} contenant les paramètres des transpositions des étages suivants E_{q-2} à E₀ à appliquer au bloc BCP_{y,q-1} de la donnée reçue sur la première entrée de l'étage suivant ET_{q-1}, et
- lors de l'opération 4), le microprocesseur est configuré pour comparer le code Cᵣₑₛ₋ₜ au résultat Dᵣₑₛ₋ₚ et déclencher le signalement d'une faute uniquement s'ils ne sont pas identiques.

8. Microprocesseur selon la revendication 2, dans lequel l'instruction arithmétique est une instruction d'addition de la donnée D₁ avec une donnée D₂ et le module (28) de sécurisation comporte un circuit (160) de calcul du code Cᵣₑₛₜ₋ₜ à partir des codes C₁ et C₂ et sans utiliser le résultat Dᵣₑₛ₋ₚ, ce circuit de calcul comportant :
- un étage d'additionneurs comportant, pour chaque paire de bits des codes C₁ et C₂ à additionner, un additionneur ADₚ, où l'indice p est le numéro d'ordre des deux bits des codes C₁ et C₂ à additionner par cet additionneur, ce numéro d'ordre variant de zéro à 2^{d}-1, chaque additionneur ADₚ comportant :
- une première (170), une deuxième (171) et une troisième (172) entrées, les première et deuxième entrée étant destinée à recevoir, respectivement, le bit du code C₁ et et le bit du code C₂ à additionner,
- une première sortie (174) délivrant le résultat a.b, où :
- "a" et "b" sont les valeurs reçues, respectivement, sur les première, et deuxième entrées, et
- le symbole "." désigne l'opération logique "ET",
- une deuxième sortie (175) délivrant le résultat a+b, où le symbole "+" désigne l'opération logique "OU",
- une troisième sortie (176) délivrant le résultat a XOR b XOR c, où "c" est la valeur reçue sur la troisième entrée (172) et XOR est le symbole de l'opération logique "OU EXCLUSIF", la concaténation des bits délivrés sur les troisièmes sorties des différents additionneurs ADₚ de l'étage d'addition formant le code Cᵣₑₛ₋ₜ,
- une unité (164) à retenue anticipée comportant une entrée sur laquelle est reçue la clé α de permutation, cette unité à retenue anticipée étant apte à déterminer les valeurs des troisièmes entrées (172) des additionneurs de l'étage d'additionneurs sur lesquelles une retenue doit être délivrée à partir des résultats délivrés sur les première (174) et deuxième (175) sorties de chaque additionneur et à partir des paramètres α_{j,q}, de la clé α reçue sur son entrée.

9. Microprocesseur selon la revendication 8, dans lequel :
- l'unité (164) à retenue anticipée comporte pour chaque étage E_{q} de la fonction F_{α}, un étage EA_{q} comportant des composants CA_{αj,q}, chaque composant CA_{αj,q} étant associé à une transposition respective T_{αj,q} de l'étage E_{q},
- les composants CA_{αj,q} des étages EA₀ à EA_{NbE-2} étant tous structurellement identiques les uns aux autres et comportant chacun une première (180), une deuxième (181), une troisième (182), une quatrième (183), une cinquième (184) et une sixième (185) entrées et une première (188), une deuxième (189), une troisième (190) et une quatrième (191) sorties :
- la première sortie délivrant le résultat (Gᵣ+Pᵣ.Gₗ).k+(Gₗ+Pₗ.Gᵣ).k', où :
- Gᵣ, Pᵣ, Gₗ, Pₗ et k sont les valeurs reçues, respectivement, sur les première, deuxième, troisième, quatrième et sixième entrées de ce composant,
- le symbole "+" désigne l'opération logique "OU",
- le symbole "." désigne l'opération logique "ET, et
- le symbole " ' " désigne l'opération logique "NON",
- la deuxième sortie (189) délivrant le résultat Pₗ.Pᵣ,
- la troisième sortie (190) délivrant le résultat cᵢ.k'+(Gₗ+Pₗ.cᵢ).k, où Cᵢ est la valeur reçue sur la cinquième entrée,
- la quatrième sortie délivrant le résultat cᵢ.k+(Gᵣ+Pᵣ.Cᵢ).k',
- le composant CA_{αj,NbE-1} de l'étage EA_{NbE-1} comporte une première, une deuxième, une troisième, une quatrième, une cinquième et une sixième entrées et une première et une deuxième sorties :
- la première sortie délivrant le résultat cᵢ.k'+(Gₗ+Pₗ.cᵢ).k, où cᵢ est la valeur reçue sur la cinquième entrée,
- la deuxième sortie délivrant le résultat cᵢ.k+(Gᵣ+Pᵣ.cᵢ).k',
- les première (180) et deuxième (181) entrées de chaque composant CA_{αj,0} de l'étage EA₀ sont raccordées, respectivement, aux première (174) et deuxième (175) sorties de l'additionneur AD₂ⱼ, où l'additionneur AD₂ⱼ est l'additionneur ADₚ dont l'indice p est égal à 2j,
- les troisième (182) et quatrième (183) entrées de chaque composant CA_{αj,0} de l'étage EA₀ sont raccordées, respectivement, aux première et deuxième sorties de l'additionneur AD₂ⱼ₊₁, où l'additionneur AD₂ⱼ₊₁ est l'additionneur ADₚ dont l'indice p est égal à 2j+1,
- les troisième (190) et quatrième (191) sorties de chaque composant CA_{αj,0} de l'étage EA₀ sont raccordées, respectivement, aux troisième entrées (172), respectivement, des additionneurs AD₂ⱼ et AD₂ⱼ₊₁,
- pour q supérieur à zéro, les première (180) et deuxième (181) entrées de chaque composant CA_{αj,q} de l'étage EA_{q} sont raccordées, respectivement, aux première (188) et deuxième (189) sorties du composant CA_{α2j,q-1} de l'étage EA_{q-1},
- pour q supérieur à zéro, les troisième (182) et quatrième (183) entrées de chaque composant CA_{αj,q} de l'étage EA_{q} sont raccordées, respectivement, aux première (188) et deuxième (189) sorties du composant CA_{α(2j+1),q-1} de l'étage EA_{q-1},
- pour q supérieur à zéro, les troisième (190) et quatrième (191) sorties de chaque composant CA_{αj,q} de l'étage EA_{q} sont raccordées, respectivement, aux cinquième entrées (184), respectivement, des composants CA_{α2j,q-1} et CA_{α(2j+1),q-1},
- la sixième entrée de chaque composant CA_{αj,q} est apte à recevoir le paramètre α_{j,q}.

10. Microprocesseur selon l'une quelconque des revendications précédentes, dans lequel :
- l'unité arithmétique et logique est apte à exécuter une instruction logique qui, lorsqu'elle est exécutée, provoque la réalisation d'une opération booléenne D₁&D₂&...&Dₙ et l'enregistrement du résultat de cette opération booléenne dans le registre Rᵣₑₛ₋ₚ, où le symbole "&" désigne l'opération booléenne, et
- le microprocesseur est configuré pour réaliser les opérations 1) à 4) pour cette instruction logique et, lors de l'exécution de l'opération 3), calculer le code Cᵣₑₛ₋ₜ à l'aide de la relation suivante : Cᵣₑₛ₋ₜ = C₁ & C₂ & ... &Cₙ.

11. Microprocesseur selon l'une quelconque des revendications précédentes, dans lequel l'opération arithmétique est choisie dans le groupe composé d'un décalage de bits, d'une rotation de bits et d'une addition.

## Patentansprüche

1. Mikroprozessor, der mit einer arithmetisch-logischen Einheit (10) und mit einem Sicherungs-Hardwaremodul (28) ausgestattet ist, wobei:
a) die arithmetisch-logische Einheit (10) geeignet ist, eine einen Opcode und einen oder mehrere Operanden aufweisende arithmetische Anweisung auszuführen, die, wenn sie von der arithmetisch-logischen Einheit des Mikroprozessors ausgeführt wird, die Durchführung einer arithmetischen Operation D₁*D₂*...*Dₙ und die Speicherung des Ergebnisses dieser Operation in einem Register Rᵣₑₛ₋ₚ bewirkt, wobei:
- der Index n gleich der Anzahl von von der arithmetischen Anweisung verarbeiteten Daten Dᵢ ist, wobei der Index n größer als oder gleich eins ist,
- D₁ bis Dₙ in Registern R₁ bis Rₙ des Mikroprozessors gespeicherte Daten sind, wobei die Größe, in Anzahl von Bits, jeder dieser Daten Dᵢ gleich 2^{d} ist, wobei d eine ganze Zahl größer als zwei ist,
- die Register R₁ bis Rₙ die von den Operanden der arithmetischen Anweisung bezeichneten Register sind,
- das Symbol « * » die vom Opcode der arithmetischen Anweisung bezeichnete arithmetische Operation ist,
b) der Mikroprozessor konfiguriert ist, die folgenden Operationen durchzuführen :
1) für jeden Datenwert Dᵢ, die Berechnung eines Codes Cᵢ mit Hilfe einer Beziehung Cᵢ = O_{α}(Dᵢ) und die Zuordnung des berechneten Codes Cᵢ zum Datenwert Dᵢ, wobei die Funktion Q_{α} eine vorprogrammierte Funktion ist, die von einem Geheimschlüssel α parametriert wird, der vorab im Mikroprozessor gespeichert wurde und nur dem Mikroprozessor bekannt ist,
2) jedes Mal, wenn eine Ladeanweisung eines Datenwerts Dᵢ in ein Register Rᵢ des Mikroprozessors vom Mikroprozessor ausgeführt wird, wird der geladene Datenwert Dᵢ im Register Rᵢ gespeichert und der ihm zugeordnete Code Cᵢ wird in dem gleichen Register Rᵢ oder in einem dem Register Rᵢ zugeordneten Register gespeichert,
3) die Ausführung der arithmetischen Anweisung und die Speicherung des Ergebnisses Dᵣₑₛ₋ₚ dieser Ausführung im Register Rᵣₑₛ₋ₚ und die Berechnung, durch das Sicherungsmodul (28), eines Codes Cᵣₑₛ₋ₜ mit Hilfe der Codes C₁, C₂, ..., Cₙ und ohne Verwendung des Ergebnisses Dᵣₑₛ₋ₚ, dann
4) die Überprüfung, dass der berechnete Code Cᵣₑₛ₋ₜ einem Code Cᵣₑₛ₋ₚ entspricht, der ausgehend vom Ergebnis Dᵣₑₛ₋ₚ erhalten wird, und die Auslösung der Signalisierung eines Ausführungsfehlers, wenn der Code Cᵣₑₛ₋ₜ nicht dem Code Cᵣₑₛ₋ₚ entspricht, und im gegenteiligen Fall, die Verhinderung dieser Signalisierung, **dadurch gekennzeichnet, dass** die Funktion Q_{α} durch die folgende Beziehung definiert wird : Q_{α}(Dᵢ) = P o F_{α}(Dᵢ), wobei P eine vorbestimmte Funktion und F_{α} eine durch die folgende Beziehung definierte Funktion ist : F_{α}(Dᵢ) = E₀ o...o E_{q} o...o E_{NbE-1}(Dᵢ), wobei jede Funktion E_{q} eine Stufe von Transpositionen ist, und der Index q eine laufende Nummer zwischen null und NbE-1 ist, wobei NbE eine ganze Zahl größer als eins und kleiner als oder gleich d ist, wobei jede Stufe E_{q} von Transpositionen durch die folgende Beziehung definiert wird : E_{q}(x) = T_{αm,q} o...o T_{αj,q} o...o T_{α1.q} o T_{α0.q}(x), wobei :
- x eine Variable ist, deren Größe, in Anzahl von Bits, gleich der Größe des Datenwerts Dᵢ ist,
- T_{αj,q} eine bedingte Transposition ist, parametriert durch den Parameter α_{j,q}, die zwei Bitblöcke B_{2j+1,q} und B_{2j,q} der Variablen x permutiert, wenn der Parameter α_{j,q} gleich einem ersten Wert ist, und die diese zwei Bitblöcke nicht permutiert, wenn der Parameter α_{j,q} gleich einem zweiten Wert ist, wobei die Transposition T_{αj,q} sich von allen anderen Transpositionen der Funktion F_{α} durch die Tatsache unterscheidet, dass sie die einzige ist, die die zwei Blöcke B_{2j+1,q} und B_{2j,q} permutiert, wenn der Parameter α_{j,q} gleich dem ersten Wert ist, wobei die Blöcke B_{2j+1,q} und B_{2j,q} aller Transpositionen T_{αj,q} der Stufe E_{q} sich voneinander unterscheiden und sich nicht überlappen, so dass alle Transpositionen T_{αj,q} der Stufe E_{q} parallel ausgeführt werden können,
- "m+1" die Gesamtanzahl von Transpositionen T_{αj,q} der Stufe E_{q} ist,
- "j" eine laufende Nummer ist, die die Transposition T_{αj,q} unter den anderen Transpositionen der Stufe E_{q} identifiziert,
- das Symbol "o" die Kompositionsoperation von Funktionen bezeichnet,
- die Verkettung der Bits aller Parameters α_{j,q} aller Stufen E_{q} gleich dem Wert des Geheimschlüssels α ist, und
- für alle Stufen E_{q}, für die q niedriger ist als NbE-1, und für alle Transpositionen T_{αj,q} dieser Stufe, befinden sich die Blöcke B_{2j+1,q} und B_{2j,q} innerhalb eines gleichen Blocks größerer Größe, der von einer Transposition der höheren Stufe E_{q+1} permutiert wird, wenn der Parameter dieser Transposition der höheren Stufe E_{q+1} gleich dem ersten Wert ist.

2. Mikroprozessor nach Anspruch 1, wobei
- die Zahl NbE gleich d ist,
- die Größen der von allen Transpositionen T_{α} einer gleichen Stufe E_{q} permutierten Blöcke gleich 2^{q} sind,
- die von jeder Transposition T_{αj,q} permutierten Blöcke B_{2j+1,q} und B_{2j,q} aneinandergrenzen.

3. Mikroprozessor nach Anspruch 2, wobei die arithmetische Anweisung eine Verschiebeanweisung der Bits des Datenwerts D₁ um ein Bit nach links oder nach rechts ist, und der Code Cᵣₑₛ₋ₜ in Abwesenheit eines Ausführungsfehlers gleich Q_{α}(Dᵣₑₛ₋ₚ) ist, wobei das Sicherungsmodul zu diesem Zweck eine Schaltung (120) zur Berechnung des Codes Cᵣₑₛₜ₋ₜ ausgehend vom Code C₁ und ohne Verwendung des Ergebnisses Dᵣₑₛ₋ₚ aufweist, wobei diese Rechenschaltung aufweist:
- für jede Stufe E_{q} der Funktion F_{α}, eine Stufe ED_{q}, die Komponenten CD_{αj,q} aufweist, wobei jede Komponente CD_{αj,q} einer Transposition T_{αj,q} der Stufe E_{q} zugeordnet ist,
- wobei die Komponenten CD_{αj,q} der Stufen ED₀ bis ED_{NbE-2} alle strukturell einander gleich sind und je einen ersten (126), einen zweiten (127), einen dritten (128) und einen vierten (129) Eingang und einen ersten (122), einen zweiten (123) und einen dritten (124) Ausgang aufweisen :
- wobei der erste Ausgang (122) das Ergebnis a.k'+c.k liefert, wobei:
- "a", "k" und "c" die Werte sind, die auf dem ersten (126), dritten (128) bzw. vierten (129) Eingang dieser Komponente empfangen werden,
- das Symbol "+" die logische Operation "ODER" bezeichnet,
- das Symbol"." die logische Operation "UND" bezeichnet, und
- das Symbol "' " die logische Operation "NICHT" bezeichnet,
- wobei der zweite Ausgang (123) das Ergebnis b.k+c.k' liefert, wobei "b" der auf dem zweiten Eingang (127) dieser Komponente empfangene Wert ist,
- wobei der dritte Ausgang (124) das Ergebnis a.k+b.k' liefert,
- wobei die Komponente CD_{αj,NbE-1} der Stufe ED_{NbE-1} einen ersten (136), einen zweiten (137) und einen dritten (138) Eingang und einen ersten (132) und einen zweiten (133) Ausgang aufweist:
- wobei der erste und der zweite Ausgang (132, 133) die Ergebnisse "a" bzw. "0" liefern, wenn der dritte Eingang (138) gleich "0" ist, wobei "a" der auf dem ersten Eingang (136) empfangene Wert und "0" der Wert null ist, und
- wobei der erste und der zweite Ausgang (132, 133) die Ergebnisse "0" bzw. "b" liefern, wenn der dritte Eingang (138) gleich "1" ist, wobei "b" der auf dem zweiten Eingang (137) empfangene Wert ist,
- für q gleich null der erste und der zweite Eingang (126, 127) jeder Komponente CD_{αj,0} der Stufe ED₀ an das 2j-te Bit bzw. an das (2j+1)-te Bit des Codes C₁ angeschlossen sind, und für q größer als null der erste und der zweite Eingang (126, 127) jeder Komponente CD_{αj,q} der Stufe ED_{q} an den dritten Ausgang (124) der 2j-ten bzw. der (2j+1)-ten Komponente der Stufe ED_{q-1} angeschlossen sind,
- der dritte Eingang jeder Komponente CD_{αj,q} an den Parameter α_{j,q}, wenn die Anweisung eine Verschiebung nach links ist, und an das Komplement α_{j,q}' des Parameters α_{j,q} angeschlossen ist, wenn die Anweisung eine Verschiebung nach rechts ist,
- für q größer als null der erste und der zweite Ausgang (122, 123) jeder Komponente CD_{αj,q} an den vierten Eingang (129) der (2j+1)-ten bzw. der 2j-ten Komponente der Stufe E_{q-1} angeschlossen sind, und für q gleich null der erste und der zweite Ausgang (122, 123) jeder Komponente CD_{αj,q} das (2j+1)-te bzw. das 2j-te Bit des Codes Cᵣₑₛₜ₋ₜ liefern.

4. Mikroprozessor nach Anspruch 2, wobei die arithmetische Anweisung eine Verschiebeanweisung der Bits des Datenwerts D₁ um 2^{r} Bits nach links oder nach rechts ist, wobei r eine ganze Zahl größer als eins und kleiner als NbE ist, und der Code Cᵣₑₛ₋ₜ in Abwesenheit eines Ausführungsfehlers gleich Q_{α}(Dᵣₑₛ₋ₚ) ist, wobei das Sicherungsmodul (28) zu diesem Zweck eine Schaltung (130) zur Berechnung des Codes Cᵣₑₛₜ₋ₜ ausgehend vom Code C₁ und ohne Verwendung des Ergebnisses Dᵣₑₛ₋ₚ aufweist, wobei diese Rechenschaltung einen Block-Permutierer (131) und einen Bit-Planer (134) aufweist,
- der Permutierer für jede Stufe E_{q} von Transpositionen, die in der Gruppe der Stufen Eᵣ bis E_{NbE-1} enthalten ist, die Blöcke einer Größe von mehr als oder gleich 2' permutieren, eine Stufe ED_{q} aufweist, die Komponenten CD_{αj,q} aufweist, wobei jede Komponente CD_{αj,q} einer Transposition T_{αj,q} der Stufe E_{q} zugeordnet ist,
- wobei die Komponenten CD_{αj,q} der Stufen EDᵣ bis ED_{NbE-2} alle strukturell einander gleich sind und je einen ersten, einen zweiten, einen dritten und einen vierten Eingang und einen ersten, einen zweiten und einen dritten Ausgang aufweisen :
- wobei der erste Ausgang das Ergebnis a.k'+c.k liefert, wobei:
- "a", "k" und "c" die auf dem ersten, dritten bzw. vierten Eingang dieser Komponente empfangenen Werte sind,
- das Symbol "+" die logische Operation "ODER" bezeichnet,
- das Symbol "." die logische Operation "UND" bezeichnet und
- das Symbol "'" die logische Operation "NICHT" bezeichnet,
- wobei der zweite Ausgang das Ergebnis b.k+c.k' liefert, wobei "b" der auf dem zweiten Eingang dieser Komponente empfangene Wert ist,
- wobei der dritte Ausgang das Ergebnis a.k+b.k' liefert,
- wobei die Komponente CD_{αj,NbE-1} der Stufe ED_{NbE-1} einen ersten, einen zweiten und einen dritten Eingang und einen ersten und einen zweiten Ausgang aufweist:
- wobei der erste und der zweite Ausgang die Ergebnisse "a" bzw. "0" liefern, wenn der dritte Eingang gleich "0" ist, wobei "a" der auf dem ersten Eingang empfangene Wert und "0" der Wert null ist, und
- der erste und der zweite Ausgang die Ergebnisse "0" bzw. "b" liefern, wenn der dritte Eingang gleich "1" ist, wobei "b" der auf dem zweiten Eingang empfangene Wert ist,
- wobei der erste und der zweite Eingang jeder Komponente CD_{αj,r} der Stufe EDᵣ an den 2j-ten Block von 2' Bits bzw. an den (2j+1)-ten Block von 2' Bits des Codes C₁ angeschlossen sind, und für q höher als r, der erste und der zweite Eingang jeder Komponente CD_{αj,q} der Stufe ED_{q} an den dritten Ausgang der 2j-ten bzw. der (2j+1)-ten Komponenten der Stufe E_{q-1} angeschlossen sind,
- wobei der dritte Eingang jeder Komponente CD_{αj,q} an den Parameter α_{j,q}, wenn die Anweisung eine Verschiebung nach links ist, und an das Komplement α_{j,q}' des Parameters α_{j,q} angeschlossen ist, wenn die Anweisung eine Verschiebung nach rechts ist,
- für q größer als r der erste und der zweite Ausgang jeder Komponente CD_{αj,q} an den vierten Eingang der (2j+1)-ten bzw. der 2j-ten Komponente der Stufe E_{q-1} angeschlossen sind, und für q gleich r der erste und der zweite Ausgang jeder Komponente CD_{αj,r} den (2j+1)-ten Zwischenblock BCI_{2j+1,r} von 2' Bits bzw. den 2j-ten Zwischenblock BCI_{2j,r} von 2' Bits eines Zwischencodes CIᵣₑₛₜ₋ₜ liefern, wobei jeder Block BCI_{x,r} gleich einem Block BC_{y,r} des Codes C₁ ist, wobei die Reihenfolge der Bits innerhalb dieses Blocks BC_{y,r} bei der Berechnung des Codes C₁ erhalten wurde, indem ein erster Satz von Transpositionen der Stufen Eᵣ₋₁ bis E₀ an einen Block BD_{z,r} von 2' Bits des Datenwerts D₁ angewendet wurde, wobei die Indices x, y und z je eine Kennung einer Position eines Blocks von 2' Bits in einem Datenwert oder ein Code von 2^{d} Bits sind, wobei der Index x gleich 2j+1, wenn die laufende Nummer des Blocks von 2' Bits ungerade ist, und sonst gleich 2j ist, und der erste Satz von Transpositionen von der Position y abhängt,
- der Planer (134) geeignet ist, jeden Zwischenblock BCI_{x,r} des Zwischencodes durch einen Block BCI_{x,r} von 2' Bits zu ersetzen, der gleich dem Ergebnis der Anwendung eines zweiten Satzes von Transpositionen der Stufen Eᵣ₋₁ bis E₀ an den Block BD_{z,r} von 2' Bits des Datenwerts D, ist, wobei der zweite Satz von Transpositionen von der Position x abhängt.

5. Mikroprozessor nach Anspruch 4, wobei der Planer (134) für jeden Block BCI_{x,r} geeignet ist :
- jeden Parameter eines aktuellen Schlüssels von Permutationen mit dem entsprechenden Parameter eines gewünschten Permutationsschlüssels zu vergleichen, wobei der aktuelle Schlüssel die Parameter aller Transpositionen des ersten Satzes von Transpositionen enthält, die bei der Berechnung des Codes C₁ verwendet werden, um die im Inneren des Blocks BD_{z,r} befindlichen Bits zu permutieren, wobei der gewünschte Schlüssel die Parameter aller Transpositionen des zweiten Satzes von Transpositionen enthält, die bei einer Berechnung von F_{α}(Dᵣₑₛ₋ₚ) verwendet werden, um die im Inneren des Blocks BD_{x,r} befindlichen Bits zu permutieren, und
- jedes Mal, wenn die verglichenen Parameter unterschiedlich sind, die durch diesen Parameter parametrierte Transposition an den Bits des Blocks BCI_{x,r} auszuführen, und
- jedes Mal, wenn die verglichenen Parameter gleich sind, die Reihenfolge der Bits des Blocks BCI_{x,r} unverändert zu lassen.

6. Mikroprozessor nach Anspruch 2, wobei die arithmetische Anweisung eine Anweisung zur Rotation der Bits des Datenwerts D, um ein Bit nach links oder nach rechts ist, und der Code Cᵣₑₛ₋ₜ in Abwesenheit eines Ausführungsfehlers gleich Q_{α}(Dᵣₑₛ₋ₚ) ist, wobei das Sicherungsmodul (28) zu diesem Zweck eine Schaltung (149) zur Berechnung des Codes Cᵣₑₛₜ₋ₜ ausgehend vom Code C₁ und ohne Verwendung des Ergebnisses Dᵣₑₛ₋ₚ aufweist, wobei diese Rechenschaltung aufweist:
- für jede Stufe E_{q} der Funktion F_{α}, eine Komponenten CC_{αj,q} aufweisende Stufe ED_{q}, wobei jede Komponente CC_{αj,q} einer Transposition T_{αj,q} der Stufe E_{q} zugeordnet ist,
- wobei die Komponenten CC_{αj,q} der Stufen ED₀ bis ED_{NbE-2} alle strukturell einander gleich sind und je einen ersten, einen zweiten, einen dritten und einen vierten Eingang und einen ersten, einen zweiten und einen dritten Ausgang aufweisen :
- wobei der erste Ausgang das Ergebnis a.k'+c.k liefert, wobei:
- "a", "k" und "c" die auf dem ersten, dritten und vierten Eingang dieser Komponente empfangenen Werte sind,
- das Symbol "+" die logische Operation "ODER" bezeichnet,
- das Symbol "." die logische Operation "UND" bezeichnet, und
- das Symbol "'" die logische Operation "NICHT" bezeichnet,
- wobei der zweite Ausgang das Ergebnis b.k+c.k' liefert, wobei "b" der auf dem zweiten Eingang dieser Komponente empfangene Wert ist,
- wobei der dritte Ausgang das Ergebnis a.k+b.k' liefert,
- wobei die Komponente CC_{αj,NbE-1} der Stufe ED_{NbE-1} einen ersten (152) und einen zweiten (153) Eingang und einen ersten (156) und einen zweiten (157) Ausgang aufweist, wobei der erste und der zweite Ausgang die Ergebnisse "a" bzw. "b" liefern, wobei "a" und "b" die auf dem ersten (152) bzw. zweiten (153) Eingang empfangenen Werte sind, und
- für q gleich null der erste und der zweite Eingang jeder Komponente CC_{αj,0} der Stufe ED₀ an das 2j-te Bit bzw. an das (2j+1)-te Bit des Codes C₁ angeschlossen sind, und für q größer als null der erste und der zweite Eingang jeder Komponente CC_{αj,q} der Stufe ED_{q} an den dritten Ausgang der 2j-ten bzw. der (2j+1)-ten Komponenten der Stufe ED_{q-1} angeschlossen sind,
- der dritte Eingang jeder Komponente CC_{αj,q} an den Parameter α_{j,q}, wenn die Anweisung eine Rotation nach links ist, und an das Komplement α_{j,q}, des Parameters α_{j,q} angeschlossen ist, wenn die Anweisung eine Rotation nach rechts ist,
- für q größer als null der erste und der zweite Ausgang jeder Komponente CC_{αj,q} an den vierten Eingang der (2j+1)-ten bzw. der 2j-ten Komponenten der Stufe E_{q-1} angeschlossen sind, und für q gleich null der erste und der zweite Ausgang jeder Komponente CC_{αj,q} das (2j+1)-te bzw. das 2j-te Bit des Codes Cᵣₑₛₜ₋ₜ liefern.

7. Mikroprozessor nach Anspruch 2, wobei die arithmetische Anweisung eine Anweisung zur Verschiebung der Bits des Datenwerts D₁ um a_{NbE-1}2^{NbE-1}+...+a_{q}2^{q}+...+a₀ Bits nach links oder nach rechts ist, wobei die Koeffizienten a_{q} vorbestimmte Koeffizienten sind, und das Sicherungsmodul (28) eine Einheit (140) zur Berechnung des Codes Cᵣₑₛₜ₋ₜ ausgehend vom Code C₁ und ohne Verwendung des Ergebnisses Dᵣₑₛₜ₋ₜ aufweist, wobei dieser Code Cᵣₑₛₜ₋ₜ gleich dem Ergebnis Dᵣₑₛ₋ₚ in Abwesenheit eines Ausführungsfehlers bei der Ausführung dieser Verschiebeanweisung durch die arithmetisch-logische Einheit ist, wobei diese Rechenschaltung für jede Stufe E_{q} der Funktion F_{α} eine Stufe ET_{q} aufweist, wobei jede Stufe ET_{q} aufweist:
- einen ersten Eingang (142), um einen zu permutierenden Code zu empfangen, wobei dieser zu permutierende Code von einer Nebeneinanderanordnung von Blöcken BCP_{y,q} von je 2 Bits gebildet wird, wobei der Index y die laufende Nummer des Blocks von 2^{q} Bits in dieser Nebeneinanderanordnung ist, wobei dieser erste Eingang den Code C₁ in dem Fall empfängt, in dem q = NbE-1,
- einen zweiten Eingang (143), um die Parameter α_{m,q} bis α_{0,q} der Transpositionen der Stufe E_{q} zu empfangen, wobei dieser zweite Eingang die Parameter α_{0,NbE-1} in dem Fall empfängt, in dem q = NbE-1,
- einen dritten Eingang (144), um einen Permutationsschlüssel für die folgenden Stufen zu empfangen, wobei dieser Permutationsschlüssel von einer Nebeneinanderanordnung von Blöcken BK_{y,q} von je 2^{q} Bits gebildet wird, wobei jeder Block BK_{y,q} nur die Parameter der Transpositionen der folgenden Stufen E_{q-1} bis E₀ enthält, die die Bits permutieren, die sich im Inneren des Blocks BCP_{y,q} des auf dem ersten Eingang empfangenen Codes befinden, wobei dieser dritte Eingang den privaten Schlüssel α des Parameters α_{0,NbE-1} in dem Fall empfängt, in dem gilt q = NbE-1,
- einen ersten Permutierer (150), der geeignet ist, die Permutation T_{αm,q} o ... o T_{αj,q} o ... o T_{α1,q} o T_{α0,q}(x) auszuführen, um einen permutierten Code zu erhalten, wobei die Variable x gleich dem auf dem ersten Eingang (142) empfangenen, zu permutierenden Code ist, und die Permutationsparameter α_{m,q} bis α_{0,q} die auf dem zweiten Eingang (143) empfangenen sind,
- ein erstes Schieberegister (154), das geeignet ist, eine Verschiebung um 2^{q} Bits des permutierten Codes durchzuführen, um einen permutierten und verschobenen Code zu erhalten,
- einen ersten Multiplexer (158), der konfiguriert ist, den permutierten Code auszuwählen, wenn der Koeffizient a_{q} gleich "0" ist, und den permutierten und verschobenen Code auszuwählen, wenn der Koeffizient a_{q} gleich "1" ist, wobei dieser erste Multiplexer einen Ausgang aufweist, der auf dem ersten Eingang der folgenden Stufe ET_{q-1} den unter dem permutierten Code und dem permutierten und verschobenen Code ausgewählten Code liefert,
- einen zweiten Permutierer (151), der geeignet ist, die Permutation T_{αm,q} o...o T_{αj,q} o...o T_{α2,q} o T_{α0,q}(x) auszuführen, um einen permutierten Schlüssel zu erhalten, wobei die Variable k gleich dem auf dem dritten Eingang (144) empfangenen Permutationsschlüssel ist,
- ein zweites Schieberegister (155), das geeignet ist, eine Verschiebung um 2^{q} Bits des permutierten Schlüssels durchzuführen, um einen permutierten und verschobenen Schlüssel zu erhalten, wobei die ersten und zweiten Schieberegister die Bits nach links verschieben, wenn die Verschiebeanweisung eine Anweisung zur Verschiebung der Bits nach links ist, und sonst die Bits nach rechts verschieben, wenn die Verschiebeanweisung eine Anweisung zur Verschiebung der Bits nach rechts ist,
- einen zweiten Multiplexer (159), der konfiguriert ist, den permutierten Schlüssel auszuwählen, wenn der Koeffizient a_{q} gleich "0" ist, und den permutierten und verschobenen Schlüssel auszuwählen, wenn der Koeffizient a_{q} gleich "1" ist, wobei dieser zweite Multiplexer aufweist:
- einen ersten Ausgang, der auf dem zweiten Eingang (143) der folgenden Stufe ET_{q,1} die Parameter α_{m,q-1} bis α_{0,q-1} liefert, die ausgehend von vorbestimmten Stellen des Schlüssels entnommen werden, der unter dem permutierten Schlüssel und dem permutierten und verschobenen Schlüssel ausgewählt wird, und
- einen zweiten Ausgang, der auf dem dritten Eingang (144) der folgenden Stufe ET_{q-1} einen Permutationsschlüssel für die folgenden Stufen liefert, der die Parameter α_{m,q-2} bis α_{0,0} aufweist, die ausgehend von vorbestimmten Stellen des Schlüssels entnommen werden, der unter dem permutierten Schlüssel und dem permutierten und verschobenen Schlüssel ausgewählt wird, wobei der auf dem zweiten Ausgang gelieferte Permutationsschlüssel von einer Nebeneinanderanordnung von Blöcken BK_{y,q-1} von je 2^{q-1} Bits gebildet wird, wobei jeder Block BK_{y,q-1} die Parameter der Transpositionen der folgenden Stufen E_{q-2} bis E₀ enthält, die an den Block BCP_{y,q-1} des auf dem ersten Eingang der folgenden Stufe ET_{q-1} empfangenen Datenwerts anzuwenden sind, und
- bei der Operation 4) der Mikroprozessor konfiguriert ist, den Code Cᵣₑₛ₋ₜ mit dem Ergebnis Dᵣₑₛ₋ₚ zu vergleichen, und die Signalisierung eines Fehlers nur dann auszulösen, wenn sie nicht gleich sind.

8. Mikroprozessor nach Anspruch 2, wobei die arithmetische Anweisung eine Anweisung zur Addition des Datenwerts D₁ mit einem Datenwert D₂ ist, und das Sicherungsmodul (28) eine Schaltung (160) zur Berechnung des Codes Cᵣₑₛₜ₋ₜ ausgehend von den Codes C₁ und C₂ und ohne Verwendung des Ergebnisses Dᵣₑₛ₋ₚ aufweist, wobei diese Rechenschaltung aufweist:
- eine Stufe von Addierern, die für jedes zu addierende Paar von Bits der Codes C₁ und C₂ einen Addierer ADₚ aufweist, wobei der Index p die laufende Nummer der zwei von diesem Addierer zu addierenden Bits der Codes C₁ und C₂ ist, wobei diese laufende Nummer von null bis 2^{d}-1 variiert, wobei jeder Addierer ADₚ aufweist:
- einen ersten (170), einen zweiten (171) und einen dritten (172) Eingang, wobei der erste und zweite Eingang dazu bestimmt sind, das Bit des Codes C₁ und das Bit des Codes C₂ zu empfangen, die zu addieren sind,
- einen ersten Ausgang (174), der das Ergebnis a.b liefert, wobei:
- "a" und "b" die auf dem ersten bzw. dem zweiten Eingang empfangenen Werte sind, und
- das Symbol "." die logische Operation "UND" bezeichnet,
- einen zweiten Ausgang (175), der das Ergebnis a+b liefert, wobei das Symbol "+" die logische Operation "ODER" bezeichnet,
- einen dritten Ausgang (176), der das Ergebnis a XOR b XOR c liefert, wobei "c" der auf dem dritten Eingang (172) empfangene Wert ist, und XOR das Symbol der logischen Operation "ODER EXKLUSIV" ist, wobei die Verkettung der auf den dritten Ausgängen der verschiedenen Addierer ADₚ der Addierstufe gelieferten Bits den Code Cᵣₑₛ₋ₜ bildet,
- eine Einheit (164) mit Vorgriffsübertrag, die einen Eingang aufweist, auf dem der Permutationsschlüssel α empfangen wird, wobei diese Einheit mit Vorgriffsübertrag geeignet ist, die Werte der dritten Eingänge (172) der Addierer der Stufe von Addierern zu bestimmen, auf denen ein Übertrag ausgehend von den auf dem ersten (174) und dem zweiten (175) Ausgang jedes Addierers gelieferten Ergebnissen und ausgehend von den Parametern α_{j,q} des auf ihrem Eingang empfangenen Schlüssels α geliefert werden soll.

9. Mikroprozessor nach Anspruch 8, wobei:
- die Einheit (164) mit Vorgriffsübertrag für jede Stufe E_{q} der Funktion F_{α1} eine Stufe EA_{q} aufweist, die Komponenten CA_{αj,q} aufweist, wobei jede Komponente CA_{αj,q} einer Transposition T_{αj,q} der Stufe E_{q} zugeordnet ist,
- die Komponenten CA_{αj,q} der Stufen EAₗ₀ bis EA_{NbE-2} alle strukturell einander gleich sind und je einen ersten (180), einen zweiten (181), einen dritten (182), einen vierten (183), einen fünften (184) und einen sechsten (185) Eingang und einen ersten (188), einen zweiten (189), einen dritten (190) und einen vierten (191) Ausgang aufweisen :
- wobei der erste Ausgang das Ergebnis (Gᵣ+Pᵣ.Gₗ).k+(Gₗ+Pₗ.Gᵣ).k' liefert, wobei:
- Gᵣ, Pᵣ, Gₗ, Pₗ und k die auf dem ersten, zweiten, dritten, vierten und sechsten Eingang dieser Komponente empfangenen Werte sind,
- das Symbol "+" die logische Operation "ODER" bezeichnet,
- das Symbol"." die logische Operation "UND" bezeichnet, und
- das Symbol "' " die logische Operation "NICHT" bezeichnet,
- wobei der zweite Ausgang (189) das Ergebnis Pₗ.Pᵣ liefert,
- wobei der dritte Ausgang (190) das Ergebnis ci.k'+(Gₗ+Pₗ.cᵢ).k liefert, wobei cᵢ der auf dem fünften Eingang empfangene Wert ist,
- wobei der vierte Ausgang das Ergebnis cᵢ.k+(Gᵣ+Pᵣ.cᵢ).k' liefert,
- die Komponente CA_{αj,NbE-1} der Stufe EA_{NbE-1} einen ersten, einen zweiten, einen dritten, einen vierten, einen fünften und einen sechsten Eingang und einen ersten und einen zweiten Ausgang aufweist:
- wobei der erste Ausgang das Ergebnis cᵢ.k'+(Gₗ+Pₗ.cᵢ).k liefert, wobei Cᵢ der auf dem fünften Eingang empfangene Wert ist,
- wobei der zweite Ausgang das Ergebnis cᵢ.k+(Gᵣ+Pᵣ.cᵢ).k' liefert,
- der erste (180) und der zweite (181) Eingang jeder Komponente CA_{αj,0} der Stufe EA₀ an den ersten (174) und zweiten (175) Ausgang des Addierers AD2j angeschlossen sind, wobei der Addierer AD₂ⱼ der Addierer ADₚ ist, dessen Index p gleich 2j ist,
- der dritte (182) und der vierte (183) Eingang jeder Komponente CA_{αj,0} der Stufe EA₀ an den ersten und den zweiten Ausgang des Addierers AD₂ⱼ₊₁ angeschlossen sind, wobei der Addierer AD₂ⱼ₊₁ der Addierer ADₚ ist, dessen Index p gleich 2j+1 ist,
- der dritte (190) und der vierte (191) Ausgang jeder Komponente CA_{αj,0} der Stufe EA₀ an den dritten Eingang (172) der Addierer AD₂ⱼ und AD₂ⱼ₊₁ angeschlossen sind,
- für q größer als null der erste (180) und der zweite (181) Eingang jeder Komponente CA_{αj,q} der Stufe EA_{q} an den ersten (188) und den zweiten (189) Ausgang der Komponente CA_{α2j,q-1} der Stufe EA_{q-1} angeschlossen sind,
- für q größer als null der dritte (182) und der vierte (183) Eingang jeder Komponente CA_{αj,q} der Stufe EA_{q} an den ersten (188) und den zweiten (189) Ausgang der Komponente CA_{α(2j+1),q-1} der Stufe EA_{q-1} angeschlossen sind,
- für q größer als null der dritte (190) und vierte (191) Ausgang jeder Komponente CA_{αj,q} der Stufe EA_{q} an den fünften Eingang (184) der Komponenten CA_{α2j,q-1} und CA_{α(2j+1),q-1} angeschlossen sind,
- der sechste Eingang jeder Komponente CA_{αj,q} geeignet ist, den Parameter α_{aj,q} zu empfangen.

10. Mikroprozessor nach einem der vorhergehenden Ansprüche, wobei:
- die arithmetisch-logische Einheit geeignet ist, eine logische Anweisung auszuführen, die, wenn sie ausgeführt wird, die Durchführung einer Booleschen Operation D₁&D₂&...&Dₙ und die Speicherung des Ergebnisses dieser Booleschen Operation im Register Rᵣₑₛ₋ₚ bewirkt, wobei das Symbol "&" die Boolesche Operation bezeichnet, und
- der Mikroprozessor konfiguriert ist, die Operationen 1) bis 4) für diese logische Anweisung durchzuführen, und bei der Ausführung der Operation 3) den Code Cᵣₑₛ₋ₜ mit Hilfe der folgenden Beziehung zu berechnen: Cᵣₑₛ₋ₜ = C₁&C₂&...&C_{n.}

11. Mikroprozessor nach einem der vorhergehenden Ansprüche, wobei die arithmetische Operation aus der Gruppe ausgewählt wird, die aus einer Bitverschiebung, einer Bitrotation und einer Addition besteht.

## Claims

1. Microprocessor equipped with an arithmetic logic unit (10) and with a hardware security module (28), wherein:
a) the arithmetic logic unit (10) is capable of executing an arithmetic instruction, comprising an opcode and one or more operands, that, when executed by the arithmetic logic unit of the microprocessor, causes a mathematical operation D₁*D₂*... *Dₙ to be performed and the result of this operation to be stored in a register Rᵣₑₛ₋ₚ, where:
- the subscript n is equal to the number of data items Dᵢ processed by the arithmetic instruction, the subscript n being greater than or equal to one,
- D₁ to Dₙ are data items that are stored in registers R₁ to Rₙ, respectively, of the microprocessor, the size, in number of bits, of each of these data items Dᵢ being equal to 2^{d}, where d is an integer greater than two,
- the registers R₁ to Rₙ are the registers denoted by the operands of the arithmetic instruction,
- the symbol "*" is the arithmetic operation denoted by the opcode of the arithmetic instruction,
b) the microprocessor is configured to perform the following operations:
1) for each data item Dᵢ, computation of a code Cᵢ using a relationship Cᵢ = Q_{α}(Dᵢ) and association of the computed code Cᵢ with the data item Dᵢ, the function Q_{α} being a pre-programmed function configured by a secret key α that is pre-stored in the microprocessor and known only to the microprocessor,
2) each time an instruction for loading a data item Dᵢ into a register Rᵢ of the microprocessor is executed by the microprocessor, the loaded data item Dᵢ is stored in the register Rᵢ and the code Cᵢ associated therewith is stored in the same register Rᵢ or in a register associated with the register Rᵢ, then
3) execution of the arithmetic instruction and storage of the result Dᵣₑₛ₋ₚ of this execution in the register Rᵣₑₛ₋ₚ, and computation, by the security module (28), of a code Cᵣₑₛ₋ₜ using the codes C₁, C₂, ..., Cₙ and without using the result Dᵣₑₛ₋ₚ, then
4) checking that the computed code Cᵣₑₛ₋ₜ corresponds to a code Cᵣₑₛ₋ₚ obtained from the result Dᵣₑₛ₋ₚ and triggering signalling of an execution fault if the code Cᵣₑₛ₋ₜ does not correspond to the code Cᵣₑₛ₋ₚ and, otherwise, suppressing this signalling, **characterized in that** the function Q_{α} is defined by the following relationship: Q_{α}(Dᵢ) = P o F_{α}(Dᵢ), where P is a predetermined function and F_{α} is a function defined by the following relationship: F_{α}(Dᵢ)= E₀ o...o E_{q} o ... o E_{NbE-1}(Dᵢ), where each function E_{q} is a transposition stage and the index q is an order number between zero and NbE-1, where NbE is a whole number greater than one and less than or equal to d, each transposition stage E_{q} being defined by the following relationship: E_{q}(x) = T_{αm,q} o... o T_{αj,q} o ... o T_{α1,q} o T_{α0,q}(x), where:
- x is a variable whose size, in number of bits, is equal to the size of the data item Dᵢ,
- T_{αj,q} is a conditional transposition, configured by the parameter α_{j,q}, that permutes two blocks of bits B_{2j+1,q} and B_{2j,q} of the variable x when the parameter α_{j,q} is equal to a first value and that does not permute these two blocks of bits when the parameter α_{j,q} is equal to a second value, the transposition T_{αj,q} differing from all of the other transpositions of the function F_{α} **in that** it is the only one that permutes the two blocks B_{2j+1,q} and B_{2j,q} when the parameter α_{j,q} is equal to the first value, the blocks B_{2j+1,q} and B_{2j,q} of all of the transpositions T_{αj,q} of the stage E_{q} being different from one another and not overlapping so that all of the transpositions T_{αj,q} of the stage E_{q} can be executed in parallel,
- "m+1" is the total number of transpositions T_{αj,q} of the stage E_{q},
- "j" is an order number identifying the transposition T_{αj,q} among the other transpositions of the stage E_{q},
- the symbol "o" denotes the function-composition operation,
- the concatenation of the bits of all of the parameters α_{j,q} of all of the stages E_{q} is equal to the value of the secret key α, and
- for all of the stages E_{q} for which q is less than NbE-1 and for all of the transpositions T_{αj,q} of this stage, the blocks B_{2j+1,q} and B_{2j,q} are placed within one and the same block of greater size permuted by a transposition of the higher stage E_{q+1} when the parameter of this transposition of the higher stage E_{q+1} is equal to the first value.

2. Microprocessor according to Claim 1, wherein
- the number NbE is equal to d,
- the sizes of the blocks permuted by all of the transpositions T_{αj,q} of one and the same stage E_{q} are equal to 2^{q},
- the blocks B_{2j+1,q} and B_{2j,q} permuted by each transposition T_{αj,q} are contiguous.

3. Microprocessor according to Claim 2, wherein the arithmetic instruction is a shift instruction for shifting the bits of the data item D₁ one bit to the left or to the right and the code Cᵣₑₛ₋ₜ is equal to Q_{α}(Dᵣₑₛ₋ₚ) in the absence of an execution fault, the security module comprising, to this end, a computation circuit (120) for computing the code Cᵣₑₛₜ₋ₜ from the code C₁ and without using the result Dᵣₑₛ₋ₚ, this computation circuit comprising:
- for each stage E_{q} of the function F_{α}, a stage ED_{q} comprising components CD_{αj,q}, each component CD_{αj,q} being associated with a respective transposition T_{αj,q} of the stage E_{q},
- the components CD_{αj,q} of the stages ED₀ to ED_{NbE-2} all being structurally identical to one another and each having a first input (126), a second input (127), a third input (128) and a fourth input (129) and a first output (122), a second output (123) and a third output (124):
- the first output (122) delivering the result a.k'+c.k, where:
- "a", "k" and "c" are the values received at the first, third and fourth inputs (126, 128, 129), respectively, of this component,
- the symbol " + " denotes the "OR" logic operation,
- the symbol " . " denotes the "AND" logic operation, and
- the symbol "'" denotes the "NOT" logic operation,
- the second output (123) delivering the result b.k+c.k', where "b" is the value received at the second input (127) of this component,
- the third output (124) delivering the result a.k+b.k',
- the component CD_{αj,NbE-1} of the stage ED_{NbE-1} having a first input (136), a second input (137) and a third input (138) and a first output (132) and a second output (133):
- the first and second outputs (132, 133) delivering the results "a" and "0", respectively, when the third input (138) is equal to "0", where "a" is the value received at the first input (136) and "0" is the value zero, and
- the first and second outputs (132, 133) delivering the results "0" and "b", respectively, when the third input (138) is equal to "1", where "b" is the value received at the second input (137),
- for q equal to zero, the first and second inputs (126, 127) of each component CD_{αj,0} of the stage ED₀ being connected to the 2j-th bit and to the (2j+1)-th bit, respectively, of the code C₁, and for q greater than zero, the first and second inputs (126, 127) of each component CD_{αj,q} of the stage ED_{q} being connected, respectively, to the third outputs (124) of the 2j-th and (2j+1)-th components, respectively, of the stage ED_{q-1},
- the third input of each component CD_{αj,q} is connected to the parameter α_{j,q} when the instruction is a left shift and to the complement α_{j,q}' of the parameter α_{j,q} when the instruction is a right shift,
- for q greater than zero, the first and second outputs (122, 123) of each component CD_{αj,q} are connected to the fourth input (129) of the (2j+1)-th and 2j-th components, respectively, of the stage E_{q-1}, and for q equal to zero, the first and second outputs (122, 123) of each component CD_{αj,0} deliver the (2j+1)-th and 2j-th bits, respectively, of the code Cᵣₑₛₜ₋ₜ.

4. Microprocessor according to Claim 2, wherein the arithmetic instruction is a shift instruction for shifting the bits of the data item D₁ 2^{r} bits to the left or to the right, where r is a whole number greater than one and less than NbE, and the code Cᵣₑₛ₋ₜ is equal to Q_{α}(Dᵣₑₛ₋ₚ) in the absence of an execution fault, the security module (28) comprising, to this end, a computation circuit (130) for computing the code Cᵣₑₛₜ₋ₜ from the code C₁ and without using the result Dᵣₑₛ₋ₚ, this computation circuit comprising a block permutator (131) and a bit scheduler (134),
- the permutator comprises, for each transposition stage E_{q} comprised in the group of stages Eᵣ to E_{NbE-1} that permute blocks of size greater than or equal to 2^{r}, a stage ED_{q} comprising components CD_{αj,q}, each component CD_{αj,q} being associated with a respective transposition T_{αj,q} of the stage E_{q},
- the components CD_{αj,q} of the stages EDᵣ to ED_{NbE-2} all being structurally identical to one another and each having a first input, a second input, a third input and a fourth input and a first output, a second output and a third output:
- the first output delivering the result a.k'+c.k, where:
- "a", "k" and "c" are the values received at the first, third and fourth inputs, respectively, of this component,
- the symbol " + " denotes the "OR" logic operation,
- the symbol " . " denotes the "AND" logic operation, and
- the symbol "'" denotes the "NOT" logic operation,
- the second output delivering the result b.k+c.k', where "b" is the value received at the second input of this component,
- the third output delivering the result a.k+b.k',
- the component CD_{αj,NbE-1} of the stage ED_{NbE-1} having a first input, a second input and a third input and a first output and a second output:
- the first and second outputs delivering the results "a" and "0", respectively, when the third input is equal to "0", where "a" is the value received at the first input and "0" is the value zero, and
- the first and second outputs delivering the results "0" and "b", respectively, when the third input is equal to "1", where "b" is the value received at the second input,
- the first and second inputs of each component CD_{αj,r} of the stage EDᵣ being connected to the 2j-th block of 2` bits and to the (2j+1)-th block of 2^{r} bits, respectively, of the code C₁, and for q greater than r, the first and second inputs of each component CD_{αj,q} of the stage ED_{q} being connected, respectively, to the third outputs of the 2j-th and (2j+1)-th components, respectively, of the stage E_{q-1},
- the third input of each component CD_{αj,q} is connected to the parameter α_{j,q} when the instruction is a left shift and to the complement α_{j,q}' of the parameter α_{j,q} when the instruction is a right shift,
- for q greater than r, the first and second outputs of each component CD_{αj,q} are connected to the fourth input of the (2j+1)-th and 2j-th components, respectively, of the stage E_{q-1}, and for q equal to r, the first and second outputs of each component CD_{αj,r} deliver the (2j+1)-th intermediate block BCI_{2j+1,r} of 2^{r} bits and the 2j-th intermediate block BCI_{2j,r} of 2` bits, respectively, of an intermediate code CIᵣₑₛₜ₋ₜ, each block BCI_{x,r} being identical to a respective block BC_{y,r} of the code C₁, the order of the bits within this block BC_{y,r} having been obtained, during computation of the code C₁, by applying a first set of transpositions of the stages Eᵣ₋₁ to E₀ to a respective block BD_{z,r} of 2` bits of the data item D₁, where the subscripts x, y and z are each an identifier of a position of a block of 2` bits in a data item or a code of 2^{d} bits, the subscript x being equal to 2j+1 if the order number of the block of 2^{r} bits is odd and equal to 2j otherwise, and the first set of transpositions being dependent on the position y,
- the scheduler (134) capable of replacing each intermediate block BCI_{x,r} of the intermediate code with a block BCR_{x,r} of 2^{r} bits that is equal to the result of the application of a second set of transpositions of the stages Eᵣ₋₁ to E₀ to the block BD_{z,r} of 2^{r} bits of the data item D₁, the second set of transpositions being dependent on the position x.

5. Microprocessor according to Claim 4, wherein the scheduler (134) is capable, for each block BCI_{x,r}:
- of comparing each parameter of a current permutation key with the corresponding parameter of a desired permutation key, the current key containing the parameters of all of the transpositions of the first set of transpositions used, during computation of the code C₁, to permute the bits placed within the block BD_{z.r}, the desired key containing the parameters of all of the transpositions of the second set of transpositions used, during a computation of F_{α}(Dᵣₑₛ₋ₚ), to permute the bits placed within the block BD_{x,r}, and,
- each time the compared parameters are different, of executing the transposition configured by this parameter on the bits of the block BCI_{x,r} and,
- each time the compared parameters are identical, of keeping the order of the bits of the block BCI_{x,r} unchanged.

6. Microprocessor according to Claim 2, wherein the arithmetic instruction is a rotation instruction for rotating the bits of the data item D₁ one bit to the left or to the right and the code Cᵣₑₛ₋ₜ is equal to Q_{α}(Dᵣₑₛ₋ₚ) in the absence of an execution fault, the security module (28) comprising, to this end, a computation circuit (149) for computing the code Cᵣₑₛₜ₋ₜ from the code C₁ and without using the result Dᵣₑₛ₋ₚ, this computation circuit comprising:
- for each stage E_{q} of the function F_{α}, a stage ED_{q} comprising components CC_{αj,q}, each component CC_{αj,q} being associated with a respective transposition T_{αj,q} of the stage E_{q},
- the components CC_{αj,q} of the stages ED₀ to ED_{NbE-2} all being structurally identical to one another and each having a first input, a second input, a third input and a fourth input and a first output, a second output and a third output:
- the first output delivering the result a.k'+c.k, where:
- "a", "k" and "c" are the values received at the first, third and fourth inputs, respectively, of this component,
- the symbol " + " denotes the "OR" logic operation,
- the symbol " . " denotes the "AND" logic operation, and
- the symbol "'" denotes the "NOT" logic operation,
- the second output delivering the result b.k+c.k', where "b" is the value received at the second input of this component,
- the third output delivering the result a.k+b.k',
- the component CC_{αj,NbE-1} of the stage ED_{NbE-1} having a first input (152) and a second input (153) and a first output (156) and a second output (157), the first and second outputs delivering the results "a" and "b", respectively, where "a" and "b" are the values received at the first and second inputs (152, 153), respectively, and
- for q equal to zero, the first and second inputs of each component CC_{αj,0} of the stage ED₀ being connected to the 2j-th bit and to the (2j+1)-th bit, respectively, of the code C₁, and for q greater than zero, the first and second inputs of each component CC_{αj,q} of the stage ED_{q} being connected, respectively, to the third outputs of the 2j-th and (2j+1)-th components, respectively, of the stage ED_{q-1},
- the third input of each component CC_{αj,q} is connected to the parameter α_{j,q} when the instruction is a left rotation and to the complement α_{j,q}' of the parameter α_{j,q} when the instruction is a right rotation,
- for q greater than zero, the first and second outputs of each component CC_{αj,q} are connected to the fourth input of the (2j+1)-th and 2j-th components, respectively, of the stage E_{q-1}, and for q equal to zero, the first and second outputs of each component CC_{αj,0} deliver the (2j+1)-th and 2j-th bits, respectively, of the code Cᵣₑₛₜ₋ₜ.

7. Microprocessor according to Claim 2, wherein the arithmetic instruction is a shift instruction for shifting the bits of the data item D₁ a_{NbE-1}2^{NbE-1}+....+a_{q}2^{q}+...+a₀ bits to the left or to the right, where the coefficients a_{q} are predetermined coefficients, and the security module (28) comprises a computation unit (140) for computing the code Cᵣₑₛₜ₋ₜ from the code C₁ and without using the result Dᵣₑₛ₋ₚ, this code Cᵣₑₛₜ₋ₜ being identical to the result Dᵣₑₛ₋ₚ in the absence of an execution fault during the execution of this shift instruction by the arithmetic logic unit, this computation circuit comprising, for each stage E_{q} of the function F_{α}, a stage ET_{q}, each stage ET_{q} having:
- a first input (142) for receiving a code to be permuted, this code to be permuted being formed by a juxtaposition of blocks BCP_{y,q} of 2^{q} bits each, the subscript y being the order number of the block of 2^{q} bits in this juxtaposition, this first input receiving the code C, when q = NbE-1,
- a second input (143) for receiving the parameters α_{m,q} to a_{0,q} of the transpositions of the stage E_{q}, this second input receiving the parameters α_{0,NbE-1} when q = NbE-1,
- a third input (144) for receiving a permutation key for the next stages, this permutation key being formed by a juxtaposition of blocks BK_{y,q} of 2^{q} bits each, each block BK_{y,q} containing only the parameters of the transpositions of the next stages E_{q-1} to E₀ that permute the bits placed within the block BCP_{y,q} of the code received at the first input, this third input receiving the private key α of the parameter α_{0,NbE-1} when q = NbE-1,
- a first permutator (150) capable of performing the permutation T_{αm,q} o...o T_{αj,q} o ... o T_{α1,q} o T_{α0,q}(x) in order to obtain a permuted code, where the variable x is equal to the code to be permuted received at the first input (142) and the permutation parameters α_{m,q} to α_{0,q} are those received at the second input (143),
- a first shift register (154) capable of performing a shift of 2^{q} bits for the permuted code in order to obtain a permuted and shifted code,
- a first multiplexer (158) configured to select the permuted code if the coefficient a_{q} is equal to "0" and to select the permuted and shifted code if the coefficient a_{q} is equal to "1", this first multiplexer having an output that delivers to the first input of the next stage ET_{q-1} the code selected from the permuted code and the permuted and shifted code,
- a second permutator (151) capable of executing the permutation T_{αm,q} o...o T_{αj,q} o ... o T_{α2,q} o T_{α0,q}(k) in order to obtain a permuted key, where the variable k is equal to the permutation key received at the third input (144),
- a second shift register (155) capable of performing a shift of 2^{q} bits for the permuted key in order to obtain a permuted and shifted key, the first and second shift registers shifting the bits to the left if the shift instruction is a shift instruction for shifting the bits to the left and, otherwise, shifting the bits to the right if the shift instruction is a shift instruction for shifting the bits to the right,
- a second multiplexer (159) configured to select the permuted key if the coefficient a_{q} is equal to "0" and to select the permuted and shifted key if the coefficient a_{q} is equal to "1", this second multiplexer having:
- a first output that delivers, at the second input (143) of the next stage ET_{q-1}, the parameters α_{m,q-1} to α_{0,q-1} extracted from predetermined locations of the key selected from among the permuted key and the permuted and shifted key, and
- a second output that delivers, to the third input (144) of the next stage ET_{q-1}, a permutation key for the next stages comprising the parameters α_{m,q-2} to α_{0,0} extracted from predetermined locations of the key selected from among the permuted key and the permuted and shifted key, the permutation key delivered at the second output being formed by a juxtaposition of blocks BK_{y,q-1} of 2^{q-1} bits each, each block BK_{y,q-1} containing the parameters of the transpositions of the next stages E_{q-2} to E₀ to be applied to the block BCP_{y,q-1} of the data item received at the first input of the next stage ET_{q-1}, and
- during operation 4), the microprocessor is configured to compare the code Cᵣₑₛ₋ₜ with the result Dᵣₑₛ₋ₚ and to trigger signalling of a fault only if they are not identical.

8. Microprocessor according to Claim 2, wherein the arithmetic instruction is an addition instruction for adding the data item D₁ to a data item D₂, and the security module (28) comprises a computation circuit (160) for computing the code Cᵣₑₛₜ₋ₜ from the codes C₁ and C₂ and without using the result Dᵣₑₛ₋ₚ, this computation circuit comprising:
- an adder stage comprising, for each pair of bits of the codes C₁ and C₂ to be added, an adder ADₚ, where the subscript p is the order number of the two bits of the codes C₁ and C₂ to be added by this adder, this order number varying from zero to 2^{d}-1, each adder ADₚ having:
- a first input (170), a second input (171) and a third input (172), the first and second inputs being intended to receive the bit of the code C₁ and the bit of the code C₂ to be added, respectively,
- a first output (174) delivering the result a.b, where:
- "a" and "b" are the values received at the first and second inputs, respectively, and
- the symbol " . " denotes the "AND" logic operation,
- a second output (175) delivering the result a+b, where the symbol "+" denotes the "OR" logic operation,
- a third output (176) delivering the result a XOR b XOR c, where "c" is the value received at the third input (172) and XOR is the symbol of the "EXCLUSIVE-OR" logic operation, the concatenation of the bits delivered at the third outputs of the various adders ADₚ of the addition stage forming the code Cᵣₑₛ₋ₜ,
- a carry look-ahead unit (164) having an input at which the permutation key α is received, this carry look-ahead unit being capable of determining the values of the third inputs (172) of the adders of the adder stage that need to have a carry delivered to them from the results delivered at the first and second outputs (174, 175) of each adder and from the parameters α_{j,q}, of the key α received at its input.

9. Microprocessor according to Claim 8, wherein:
- the carry look-ahead unit (164) comprises, for each stage E_{q} of the function F_{α}, a stage EA_{q} comprising components CA_{αj,q}, each component CA_{αj,q} being associated with a respective transposition T_{αj,q} of the stage E_{q},
- the components CA_{αj,q} of the stages EA₀ to EA_{NbE-2} all being structurally identical to one another and each having a first input (180), a second input (181), a third input (182), a fourth input (183), a fifth input (184) and a sixth input (185) and a first output (188), a second output (189), a third output (190) and a fourth output (191):
- the first output delivering the result (Gᵣ+Pᵣ.Gₗ).k+(Gₗ+Pₗ.Gᵣ).k', where:
- Gᵣ, Pᵣ, Gₗ, Pₗ and k are the values received at the first, second, third, fourth and sixth inputs, respectively, of this component,
- the symbol " + " denotes the "OR" logic operation,
- the symbol " . " denotes the "AND" logic operation, and
- the symbol " ' " denotes the "NOT" logic operation,
- the second output (189) delivering the result Pₗ.Pᵣ,
- the third output (190) delivering the result cᵢ.k'+(Gₗ+Pₗ.cᵢ).k, where cᵢ is the value received at the fifth input,
- the fourth output delivering the result cᵢ.k+(Gᵣ+Pᵣ.cᵢ).k',
- the component CA_{αj,NbE-1} of the stage EA_{NbE-1} has a first input, a second input, a third input, a fourth input, a fifth input and a sixth input and a first output and a second output:
- the first output delivering the result cᵢ.k'+(Gₗ+Pₗ.cᵢ).k, where cᵢ is the value received at the fifth input,
- the second output delivering the result cᵢ.k+(Gᵣ+Pᵣ.cᵢ).k',
- the first and second inputs (180, 181) of each component CA_{αj,0} of the stage EA₀ are connected to the first and second outputs (174, 175), respectively, of the adder AD₂ⱼ, where the adder AD₂ⱼ is the adder ADₚ, the subscript p of which is equal to 2j,
- the third and fourth inputs (182, 183) of each component CA_{αj,0} of the stage EA₀ are connected to the first and second outputs, respectively, of the adder AD₂ⱼ₊₁, where the adder AD₂ⱼ₊₁ is the adder ADₚ, the subscript p of which is equal to 2j+1,
- the third and fourth outputs (190, 191) of each component CA_{αj,0} of the stage EA₀ are connected, respectively, to the third inputs (172) of the adders AD₂ⱼ and AD₂ⱼ₊₁, respectively,
- for q greater than zero, the first and second inputs (180, 181) of each component CA_{αj,q} of the stage EA_{q} are connected to the first and second outputs (188, 189), respectively, of the component CA_{α2j,q-1} of the stage EA_{q-1},
- for q greater than zero, the third and fourth inputs (182, 183) of each component CA_{αj,q} of the stage EA_{q} are connected to the first and second outputs (188, 189), respectively, of the component CA_{α(2j+1),q-1} of the stage EA_{q-1},
- for q greater than zero, the third and fourth outputs (190, 191) of each component CA_{αj,q} of the stage EA_{q} are connected, respectively, to the fifth inputs (184) of the components CA_{α2j,q-1} and CA_{α(2j+1),q-1}, respectively,
- the sixth input of each component CA_{αj,q} is capable of receiving the parameter α_{j,q}.

10. Microprocessor according to any one of the preceding claims, wherein:
- the arithmetic logic unit is capable of executing a logic instruction that, when executed, causes a Boolean operation D₁&D₂&...&Dₙ to be performed and the result of this Boolean operation to be stored in the register Rᵣₑₛ₋ₚ, where the "&" symbol denotes the Boolean operation, and
- the microprocessor is configured to perform operations 1) to 4) for this logic instruction and, during the execution of operation 3), to compute the code Cᵣₑₛ₋ₜ using the following relationship: Cᵣₑₛ₋ₜ = C₁ & C₂ & ... &Cₙ.

11. Microprocessor according to any one of the preceding claims, wherein the arithmetic operation is chosen from the group made up of a bit shift, a bit rotation and an addition.
